# EUROPEAN PATENT APPLICATION

(11) **EP 4 261 691 A1**
(43) Date of publication of application: **18.10.2023**
(21) Application number: 21917315.0
(22) Date of filing: 28.12.2021
(51) Int. Cl.: G06F 11/36

(54) **METHOD AND DEVICE FOR OPTIMIZING COMPUTATIONAL GRAPH**

(30) Priority: 08.01.2021 CN 202110025059
(71) Applicant: Huawei Technologies Co., Ltd., Shenzhen, Guangdong 518129 (CN)
(72) Inventor: YAN, Baicheng, Shenzhen, Guangdong 518129 (CN); CAO, Zongyan, Shenzhen, Guangdong 518129 (CN); WANG, Long, Shenzhen, Guangdong 518129 (CN); WANG, Zheng, Shenzhen, Guangdong 518129 (CN); CHEN, Liangyu, Shenzhen, Guangdong 518129 (CN)
(74) Representative: Huawei European IPR
(86) International application number: PCT/CN2021/142219
(87) International publication number: WO 2022/148276

(57) **Abstract**

This application discloses a computational graph optimization method and apparatus, and relates to the field of computer technologies. The method can improve efficiency of optimizing a computational graph in a graph transformation manner. The method is executed by a computational graph optimization apparatus. The method includes: obtaining a first computational graph obtained through conversion based on to-be-optimized code; and performing a plurality of iterative transformations on the first computational graph based on a plurality of preset graph transformation manners, to obtain an optimized first computational graph, that is, obtain a target computational graph.

## Description

### TECHNICAL FIELD

This application relates to the field of computer technologies, and in particular, to a computational graph optimization method and apparatus.

### BACKGROUND

A computational graph (computational graph) is a multi-graph structure representing a computing task and a data flow process of an application. Application code may be converted into a computational graph corresponding to the application code according to a preset computational graph conversion rule. A graph transformation (graph transformation) refers to a processing manner of adjusting a structure of a computational graph corresponding to an application while keeping input/output of the application and an internal logical relationship of the application unchanged. Therefore, several graph transformations are performed on the computational graph corresponding to the application, so that the application can be optimized, for example, execution efficiency of the application is improved. A target computational graph can be obtained after several graph transformations are performed on the computational graph corresponding to the application code, and optimized application code can be obtained by converting the target computational graph according to the preset computational graph conversion rule.

Usually, a process of optimizing a computational graph in a graph transformation manner is a loop iterative optimization process. However, in the conventional technology, when optimizing a computational graph in each iterative transformation, a user needs to master various preset graph transformation manners and combine actual optimization experience to select a proper graph transformation manner to perform a graph transformation on a to-be-optimized computational graph, so as to optimize the computational graph, and further optimize an application corresponding to the computational graph. It can be learned that, in an existing method for optimizing a computational graph in a graph transformation manner, a graph transformation manner used for optimizing a computational graph in each iteration is manually selected based on optimization experience and a degree to which the user masters the graph transformation manner. Consequently, optimization efficiency is low.

Based on this, how to improve efficiency of optimizing the computational graph in the graph transformation manner is a technical problem to be urgently resolved in the conventional technology.

### SUMMARY

This application provides a computational graph optimization method and apparatus. The method can improve efficiency of optimizing a computational graph in a graph transformation manner.

To achieve the objective, this application provides the following technical solutions.

According to a first aspect, this application provides a computational graph optimization method, and the method is performed by a computational graph optimization apparatus. The method includes: obtaining a first computational graph obtained through conversion based on to-be-optimized code; and performing a plurality of iterative transformations on the first computational graph based on a plurality of preset graph transformation manners, to obtain a target computational graph. The target computational graph is a computational graph obtained by optimizing the first computational graph.

According to the computational graph optimization method provided in this application, automatic optimization of a computational graph can be implemented in a manner of iterative transformation of the computational graph. Therefore, compared with a computational graph optimization method that requires manual intervention, the method provided in this application can improve computational graph optimization efficiency, and further improve optimization efficiency of an application corresponding to the computational graph. In addition, the graph transformation manner can determine an optimization objective of the application. The optimization objective may be optimization of a running speed of the application, optimization of adaptability after the application is migrated to a computing system, or the like. In this way, in the method provided in this application, different optimization objectives can be implemented based on different graph transformation manners, so that an application scope of the method provided in this application is improved.

In a possible design, the "performing a plurality of iterative transformations on the first computational graph based on a plurality of preset graph transformation manners, to obtain a target computational graph" includes: in any one of the plurality of iterative transformations, performing, based on a performance evaluation policy, performance evaluation on a computational graph obtained through a transformation in at least one of the plurality of preset graph transformation manners; and determining the target computational graph based on a performance evaluation result.

In another possible design, the foregoing performance evaluation policy includes: performing performance evaluation on the computational graph based on a quantity of calculation operations and a quantity of memory access operations that are of an abstract syntax tree AST corresponding to the computational graph; or performing performance evaluation on the computational graph based on running time of executable code corresponding to the computational graph.

According to the foregoing two possible designs, in the method provided in this application, when a computational graph is automatically optimized, a computational graph with optimal performance obtained through each iterative transformation may be found by using a performance evaluation policy in an iterative transformation process. In this way, in this application, a final target computational graph may be determined based on an optimal computational graph obtained through each iterative transformation. This implements an objective of improving an optimization degree of an application corresponding to the computational graph.

In another possible design, the "performing a plurality of iterative transformations on the first computational graph based on a plurality of preset graph transformation manners, to obtain a target computational graph" further includes: for any one of the plurality of iterative transformations, selecting, based on a search policy, a to-be-optimized computational graph in a next iterative transformation of the any iterative transformation from a plurality of computational graphs obtained through the any iterative transformation; and performing, based on the plurality of preset graph transformation manners, the plurality of iterative transformations on the to-be-optimized computational graph in the next iterative transformation, to obtain the target computational graph.

In another possible design, the search policy includes: determining, in the plurality of computational graphs based on performance of the computational graphs, the to-be-optimized computational graph in the next iterative transformation.

According to the foregoing two possible designs, in the method provided in this application, when a computational graph is automatically optimized, a computational graph with better performance is selected in an iterative transformation process as a to-be-optimized computational graph in a next iterative transformation of a current iterative transformation based on performance of a computational graph obtained after the current iterative transformation. This can improve an optimization degree of an application corresponding to the computational graph.

In another possible design, the "performing a plurality of iterative transformations on the first computational graph based on a plurality of preset graph transformation manners, to obtain a target computational graph" further includes: in any iterative transformation except a first iterative transformation in the plurality of iterative transformations, removing, based on a pruning policy, an invalid graph transformation manner from a candidate graph transformation manner used to transform a computational graph; and performing the plurality of iterative transformations on the first computational graph based on a plurality of preset graph transformation manners in which the invalid graph transformation manner is removed, to obtain the target computational graph. The candidate graph transformation manner includes at least one of the plurality of preset graph transformation manners.

In another possible design, the pruning policy includes at least one of the following policies: a quantity of times of loop tiling performed on same loop logic exceeds a preset threshold; loop interchange is performed on two same pieces of loop logic for a plurality of times; same loop logic is first expanded and then collapsed, or is first collapsed and then expanded; or same loop logic is first fissed and then fused, or is first fused and then fissed.

According to the foregoing two possible designs, in the method provided in this application, an invalid graph transformation manner in a candidate graph transformation manner used to transform a computational graph can be removed from any iterative transformation except the first iterative transformation. This avoids an iterative transformation rollback caused by the invalid graph transformation manner, and further improves loop convergence efficiency of iteratively optimizing the computational graph.

A "candidate graph transformation manner used to transform a computational graph in a current iterative transformation" may be referred to as a "current candidate graph transformation manner", and a "graph transformation manner used to transform a computational graph in an iterative transformation before the current iterative transformation" may be referred to as a "previous graph transformation manner". In this case, the invalid graph transformation manner may be a graph transformation manner in which the current candidate graph transformation manner and the previous graph transformation manner are mutually inverse, or the current graph transformation manner is a graph transformation manner in which an invalid condition is met.

For example, in the previous graph transformation manner, a loop 1 is collapsed, and in the current candidate graph transformation manner, the loop 1 is expanded. In this case, it indicates that the current candidate graph transformation manner and the previous graph transformation manner are mutually inverse, that is, the current candidate graph transformation manner is invalid.

For another example, in three previous graph transformation manners of the previous graph transformation manner, loop tiling has been performed on the loop 1 for three times, and in the current candidate graph transformation manner, loop tiling is performed on the loop 1. If the invalid condition is that a maximum threshold of loop tiling performed on a same loop is 3, the current candidate graph transformation manner meets the invalid condition, that is, the current candidate graph transformation manner is invalid.

In another possible design, the "performing a plurality of iterative transformations on the first computational graph based on a plurality of preset graph transformation manners, to obtain a target computational graph" includes: determining m candidate graph transformation manners from the plurality of preset graph transformation manners; transforming the first computational graph based on each of the m candidate graph transformation manners, to obtain m second computational graphs; and determining the target computational graph based on the m second computational graphs. The m candidate graph transformation manners match a subgraph in the first computational graph, m is a positive integer, and the m second computational graphs are in a one-to-one correspondence with the m candidate graph transformation manners.

In another possible design, the "determining the target computational graph based on the m second computational graphs" includes: determining a first candidate target computational graph in the m second computational graphs, where performance of the first candidate target computational graph is better than performance of a computational graph other than the first candidate target computational graph in the m second computational graphs; and determining the target computational graph based on the first candidate target computational graph.

The two possible designs implement a first iterative transformation process in the method for iteratively optimizing a computational graph provided in this application. In this process, the first candidate target computational graph is used as an alternative target computational graph, and is used for determining the target computational graph from all candidate target computational graphs obtained in an iterative optimization process.

In another possible design, the "determining the target computational graph based on the m second computational graphs" further includes: determining a third computational graph in the m second computational graphs; determining n candidate graph transformation manners from the plurality of preset graph transformation manners based on the third computational graph; then transforming the third computational graph based on each of the n candidate graph transformation manners, to obtain n fourth computational graphs; determining a second candidate target computational graph in the n fourth computational graphs; and then determining the target computational graph based on the first candidate computational graph and the second candidate target computational graph. The n candidate graph transformation manners match a subgraph in the third computational graph, and n is a positive integer. The n candidate graph transformation manners are in a one-to-one correspondence with the n fourth computational graphs. Performance of the second candidate target computational graph is better than performance of a computational graph other than the second candidate target computational graph in the n fourth computational graphs.

The possible design implements a second iterative transformation process in the method for iteratively optimizing a computational graph provided in this application. In this process, the second candidate target computational graph is used as an alternative target computational graph, and is used for determining the target computational graph from all candidate target computational graphs (for example, the first candidate target computational graph) obtained in the iterative optimization process.

In another possible design, the "determining a first candidate target computational graph in the m second computational graphs" includes: collecting statistics on a quantity of calculation operations and a quantity of memory access operations that are of m ASTs corresponding to the m second computational graphs; and determining the first candidate target computational graph in the m second computational graphs based on the quantity of calculation operations and the quantity of memory access operations that are of the m ASTs. A quantity of calculation operations and a quantity of memory access operations that are of any one of the m ASTs indicate performance of a second computational graph corresponding to the any AST.

In another possible design, the "determining a first candidate target computational graph in the m second computational graphs" includes: determining running time of m pieces of executable code corresponding to the m second computational graphs; and determining the first candidate target computational graph in the m second computational graphs based on the running time of the m pieces of executable code. Running time of any one of the m pieces of executable code indicates performance of a second computational graph corresponding to the any piece of executable code.

In another possible design, the "determining a third computational graph in the m second computational graphs" includes: determining the third computational graph in the m second computational graphs based on performance of the m second computational graphs. There is at least one third computational graph.

According to the foregoing several possible designs, in the method provided in this application, a quantity of calculation operations and a quantity of memory access operations that are of an AST corresponding to a computational graph may be counted, or running time of executable code corresponding to the computational graph may be determined, to determine performance of the computational graph obtained after the computational graph is transformed in a graph transformation manner. Therefore, in one aspect, a target computational graph with optimal performance globally (that is, after iterative transformation convergence) can be determined based on a computational graph with optimal performance determined in each iterative transformation, so that an optimization degree of an application corresponding to the computational graph can be improved. In another aspect, in the method provided in this application, a better computational graph may be determined as a to-be-optimized computational graph in a next iterative transformation of the current iterative transformation based on determined performance advantages and disadvantages of the computational graph transformed in the graph transformation manner. In this way, the optimization degree of the application corresponding to the computational graph can be improved.

In another possible design, the "determining n candidate graph transformation manners from the plurality of preset graph transformation manners based on the third computational graph" includes: determining j initial candidate graph transformation manners from the plurality of preset graph transformation manners based on the third computational graph and according to a subgraph matching rule. Then, the m candidate graph transformation manners are determined from the j initial candidate graph transformation manners based on the pruning policy. The j candidate graph transformation manners match a subgraph in the third computational graph, and j is an integer greater than or equal to n. The pruning policy is used to remove an invalid graph transformation manner from the j initial candidate graph transformation manners.

According to the possible design, in the method provided in this application, an invalid graph transformation manner in a candidate graph transformation manner used to transform a computational graph can be removed based on the pruning policy. This avoids an iterative transformation rollback caused by the invalid graph transformation manner, and further improves loop convergence efficiency of iteratively optimizing the computational graph.

In another possible design, the "obtaining a first computational graph" includes: receiving the first computational graph input by a user.

In another possible design, the "obtaining a first computational graph" includes: obtaining the to-be-optimized code; and converting the to-be-optimized code into the first computational graph according to a preset conversion rule.

In another possible design, before the "converting the to-be-optimized code into the first computational graph according to a preset conversion rule", the method further includes: receiving the preset conversion rule input by a user.

According to the foregoing three possible designs, the method provided in this application may provide different manners of obtaining the first computational graph, so that an application scenario of the method provided in this application can be increased.

In another possible design, before the "performing a plurality of iterative transformations on the first computational graph based on a plurality of preset graph transformation manners, to obtain a target computational graph", the method further includes: receiving a preset graph transformation manner input by the user.

Because a graph transformation manner is used to determine an optimization objective of an application corresponding to a computational graph, according to this possible design, in the method provided in this application, an optimization objective expected by the user can be achieved based on the graph transformation manner designed by the user based on an optimization objective of the user. This improves user experience.

In another possible design, the method further includes: outputting the target computational graph.

In another possible design, the method further includes: determining target code based on the target computational graph; compiling the target code to obtain target executable code; and outputting the target executable code. The target code is code obtained by optimizing the to-be-optimized code.

According to the foregoing two possible designs, in the method provided in this application, different outputs can be provided for the user based on a requirement of the user, so that user experience is improved.

According to a second aspect, this application provides a method for providing a computational graph optimization service. The method includes: receiving a first computational graph sent by a user end; performing a plurality of iterative transformations on the first computational graph based on a plurality of preset graph transformation manners, to obtain a target computational graph; and sending the target computational graph to the user end. The first computational graph is obtained through conversion based on to-be-optimized code, and the target computational graph is a computational graph obtained by optimizing the first computational graph.

In a possible design, the "performing a plurality of iterative transformations on the first computational graph based on a plurality of preset graph transformation manners, to obtain a target computational graph" includes: in any one of the plurality of iterative transformations, performing, based on a performance evaluation policy, performance evaluation on a computational graph obtained through a transformation in at least one of the plurality of preset graph transformation manners; and determining the target computational graph based on a performance evaluation result.

In another possible design, the foregoing performance evaluation policy includes: performing performance evaluation on the computational graph based on a quantity of calculation operations and a quantity of memory access operations that are of an abstract syntax tree AST corresponding to the computational graph; or performing performance evaluation on the computational graph based on running time of executable code corresponding to the computational graph.

In another possible design, the "performing a plurality of iterative transformations on the first computational graph based on a plurality of preset graph transformation manners, to obtain a target computational graph" further includes: for any one of the plurality of iterative transformations, selecting, based on a search policy, a to-be-optimized computational graph in a next iterative transformation of the any iterative transformation from a plurality of computational graphs obtained through the any iterative transformation; and performing, based on the plurality of preset graph transformation manners, the plurality of iterative transformations on the to-be-optimized computational graph in the next iterative transformation, to obtain the target computational graph.

In another possible design, the search policy includes: determining, in the plurality of computational graphs based on performance of the computational graphs, the to-be-optimized computational graph in the next iterative transformation.

In another possible design, the "performing a plurality of iterative transformations on the first computational graph based on a plurality of preset graph transformation manners, to obtain a target computational graph" further includes: in any iterative transformation except a first iterative transformation in the plurality of iterative transformations, removing, based on a pruning policy, an invalid graph transformation manner from a candidate graph transformation manner used to transform a computational graph; and performing the plurality of iterative transformations on the first computational graph based on a plurality of preset graph transformation manners in which the invalid graph transformation manner is removed, to obtain the target computational graph. The candidate graph transformation manner includes at least one of the plurality of preset graph transformation manners.

In another possible design, the pruning policy includes at least one of the following policies: a quantity of times of loop tiling performed on same loop logic exceeds a preset threshold; loop interchange is performed on two same pieces of loop logic for a plurality of times; same loop logic is first expanded and then collapsed, or is first collapsed and then expanded; or same loop logic is first fissed and then fused, or is first fused and then fissed.

In another possible design, before the "performing a plurality of iterative transformations on the first computational graph based on a plurality of preset graph transformation manners, to obtain a target computational graph", the method further includes: receiving a preset graph transformation manner sent by the user end.

For descriptions of beneficial effects of any one of the second aspect and the possible designs of the second aspect, refer to the technical solutions provided in the first aspect or the corresponding possible design of the first aspect. Details are not described herein again.

According to a third aspect, this application provides a computational graph optimization apparatus. The computational graph optimization apparatus includes: an obtaining unit, configured to obtain a first computational graph, where the first computational graph is obtained through conversion based on to-be-optimized code; and a processing unit, configured to perform a plurality of iterative transformations on the first computational graph based on a plurality of preset graph transformation manners, to obtain a target computational graph. The target computational graph is a computational graph obtained by optimizing the first computational graph.

In another possible design, the processing unit is specifically configured to: in any one of the plurality of iterative transformations, perform, based on a performance evaluation policy, performance evaluation on a computational graph obtained through a transformation in at least one of the plurality of preset graph transformation manners. The apparatus further includes a determining unit, configured to determine the target computational graph based on a performance evaluation result.

In another possible design, for any one of the plurality of iterative transformations, the processing unit is further specifically configured to: select, based on a search policy, a to-be-optimized computational graph in a next iterative transformation of the any iterative transformation from a plurality of computational graphs obtained through the any iterative transformation; and perform, based on the plurality of preset graph transformation manners, the plurality of iterative transformations on the to-be-optimized computational graph in the next iterative transformation, to obtain the target computational graph.

In another possible design, in any iterative transformation except a first iterative transformation in the plurality of iterative transformations, the processing unit is further specifically configured to: remove, based on a pruning policy, an invalid graph transformation manner from the plurality of preset graph transformation manners used to transform a computational graph; and perform the plurality of iterative transformations on the first computational graph based on a plurality of preset graph transformation manners in which the invalid graph transformation manner is removed, to obtain the target computational graph.

In another possible design, the foregoing performance evaluation policy includes: performing performance evaluation on the computational graph based on a quantity of calculation operations and a quantity of memory access operations that are of an abstract syntax tree AST corresponding to the computational graph; or performing performance evaluation on the computational graph based on running time of executable code corresponding to the computational graph.

In another possible design, the search policy includes: determining, in the plurality of computational graphs based on performance of the computational graphs, the to-be-optimized computational graph in the next iterative transformation.

In another possible design, the pruning policy includes at least one of the following policies: a quantity of times of loop tiling performed on same loop logic exceeds a preset threshold; loop interchange is performed on two same pieces of loop logic for a plurality of times; same loop logic is first expanded and then collapsed, or is first collapsed and then expanded; or same loop logic is first fissed and then fused, or is first fused and then fissed.

In another possible design, the determining unit is further configured to determine m candidate graph transformation manners from the plurality of preset graph transformation manners. The m candidate graph transformation manners match a subgraph in the first computational graph, and m is a positive integer. The processing unit is specifically configured to transform the first computational graph based on each of the m candidate graph transformation manners, to obtain m second computational graphs. The m second computational graphs are in a one-to-one correspondence with the m candidate graph transformation manners. The determining unit is specifically configured to determine the target computational graph based on the m second computational graphs.

In another possible design, the determining unit is specifically configured to: determine a first candidate target computational graph in the m second computational graphs, where performance of the first candidate target computational graph is better than performance of a computational graph other than the first candidate target computational graph in the m second computational graphs; and determine the target computational graph based on the first candidate target computational graph.

In another possible design, the determining unit is further configured to: determine a third computational graph in the m second computational graphs; and determine n candidate graph transformation manners from the plurality of preset graph transformation manners based on the third computational graph. The n candidate graph transformation manners match a subgraph in the third computational graph, and n is a positive integer. The processing unit is further configured to transform the third computational graph based on each of the n candidate graph transformation manners, to obtain n fourth computational graphs. The n fourth computational graphs are in a one-to-one correspondence with the n candidate graph transformation manners. The determining unit is further configured to: determine a second candidate target computational graph in the n fourth computational graphs; and determine the target computational graph based on the first candidate computational graph and the second candidate target computational graph. Performance of the second candidate target computational graph is better than performance of a computational graph other than the second candidate target computational graph in the n fourth computational graphs.

In another possible design, the apparatus further includes a receiving unit, configured to receive the first computational graph input by a user.

In another possible design, the obtaining unit is further configured to obtain the to-be-optimized code. The processing unit is further configured to convert the to-be-optimized code into the first computational graph according to an obtained preset conversion rule.

In another possible design, the receiving unit is further configured to: before converting the to-be-optimized code into the first computational graph according to the preset conversion rule, receive the preset conversion rule input by a user.

In another possible design, the receiving unit is further configured to: before performing a plurality of iterative transformations on the first computational graph based on the plurality of preset graph transformation manners, to obtain the target computational graph, receive a preset graph transformation manner input by the user.

In another possible design, the apparatus further includes an output unit, configured to output the target computational graph.

In another possible design, the determining unit is further configured to determine target code based on the target computational graph. The target code is code obtained by optimizing the to-be-optimized code. The processing unit is further configured to compile the target code to obtain target executable code. The output unit is further configured to output the target executable code.

For descriptions of beneficial effects of any one of the third aspect and the possible designs of the third aspect, refer to the technical solutions provided in the first aspect or the corresponding possible design of the first aspect. Details are not described herein again.

According to a fourth aspect, this application provides an apparatus for providing a computational graph optimization service, including: a receiving unit, configured to receive a first computational graph that is sent by a user end and obtained through conversion based on to-be-optimized code; a processing unit, configured to perform a plurality of iterative transformations on the received first computational graph based on a plurality of preset graph transformation manners, to obtain a target computational graph; and a sending unit, configured to send the target computational graph to the user end. The target computational graph is a computational graph obtained by optimizing the first computational graph.

For descriptions of beneficial effects of any one of the fourth aspect and the possible designs of the fourth aspect, refer to the technical solutions provided in the second aspect or the corresponding possible design of the second aspect. Details are not described herein again.

According to a fifth aspect, this application further provides a computational graph optimization apparatus, including a memory and one or more processors, where the memory is coupled to the processor. The memory is configured to store computer instructions. The processor is configured to invoke the computer instructions, to perform any method according to any one of the first aspect or the possible designs of the first aspect.

According to a sixth aspect, this application further provides an apparatus for providing a computational graph optimization service, including a memory and one or more processors, where the memory is coupled to the processor. The memory is configured to store computer instructions. The processor is configured to invoke the computer instructions, to perform any method according to any one of the second aspect or the possible designs of the second aspect.

According to a seventh aspect, this application provides a computer-readable storage medium, for example, a non-transient computer-readable storage medium. The computer-readable storage medium stores a computer program (or instructions). When the computer program (or the instructions) is/are run on a computer, the computer is enabled to perform any method according to any one of the possible implementations of the first aspect or the second aspect.

According to an eighth aspect, this application provides a computer program product. When the computer program product runs on a computer, any method according to any possible implementation of the first aspect or the second aspect is performed.

According to a ninth aspect, this application provides a chip system, including a processor. The processor is configured to: invoke, from a memory, a computer program stored in the memory, and run the computer program, to perform any method according to the implementation of the first aspect or the second aspect.

It may be understood that any one of the apparatus, the computer storage medium, the computer program product, the chip system, or the like provided above may be applied to a corresponding method provided above. Therefore, for beneficial effects that can be achieved by the apparatus, the computer storage medium, the computer program product, the chip system, or the like, refer to the beneficial effects of the corresponding method. Details are not described herein again.

In this application, names of the computational graph optimization apparatus and the apparatus for providing a computational graph optimization service constitute no limitation on devices or functional modules. In an actual implementation, these devices or functional modules may appear with other names. Each device or functional module falls within the scope defined by the claims and their equivalent technologies in this application, provided that a function of the device or functional module is similar to that described in this application.

These aspects or other aspects in this application are more concise and comprehensible in the following descriptions.

### BRIEF DESCRIPTION OF DRAWINGS

FIG. 1 is a schematic diagram of a computational graph according to an embodiment of this application;
FIG. 2 is a schematic diagram of a computational graph optimization method according to the conventional technology;
FIG. 3 is a schematic diagram of a structure of a computing device according to an embodiment of this application;
FIG. 4 is a schematic flowchart of a computational graph optimization method according to an embodiment of this application;
FIG. 5 is a schematic diagram of obtaining a preset conversion rule by an optimization apparatus according to an embodiment of this application;
FIG. 6 is a schematic diagram of collecting statistics on a quantity of calculation operations and a quantity of memory access operations that are of an AST according to an embodiment of this application;
FIG. 7 is a schematic diagram of implementing computational graph optimization by an optimization apparatus through a plurality of iterative transformations according to an embodiment of this application;
FIG. 8 is another schematic diagram of implementing computational graph optimization by an optimization apparatus through a plurality of iterative transformations according to an embodiment of this application;
FIG. 9A to FIG. 9C are a schematic flowchart of another computational graph optimization method according to an embodiment of this application;
FIG. 10 is a schematic diagram of performing loop tiling on a computational graph according to an embodiment of this application;
FIG. 11 is a schematic diagram of performing loop interchange on a computational graph according to an embodiment of this application;
FIG. 12 is a schematic diagram of performing expansion and collapse operations on loop logic in a computational graph according to an embodiment of this application;
FIG. 13 is a schematic diagram of performing fission and fusion operations on loop logic in a computational graph according to an embodiment of this application;
FIG. 14 is a schematic diagram of determining an invalid graph transformation manner based on a pruning policy according to an embodiment of this application;
FIG. 15 is a schematic diagram of a structure of a computational graph optimization apparatus according to an embodiment of this application;
FIG. 16 is a schematic diagram of a structure of an apparatus for providing a computational graph optimization service according to an embodiment of this application;
FIG. 17 is a schematic diagram of a structure of a chip system according to an embodiment of this application; and
FIG. 18 is a schematic diagram of a structure of a computer program product according to an embodiment of this application.

### DESCRIPTION OF EMBODIMENTS

To better understand embodiments of this application, the following describes some terms or technologies used in embodiments of this application.

### (1) Computational graph (computational graph)

A computational graph is a language that describes a function through a graph structure.

Usually, a computational graph may include a plurality of nodes and edges between the nodes. The node of the computational graph may represent content such as data, a variable, an expression, code with different semantics, and/or an operation, and certainly is not limited thereto. An edge of the computational graph may represent a data flow direction between nodes, or represent a logical relationship between nodes.

The code with different semantics may be, for example, code with loop logic semantics. In embodiments of this application, code with loop logic semantics is referred to as loop logic for short.

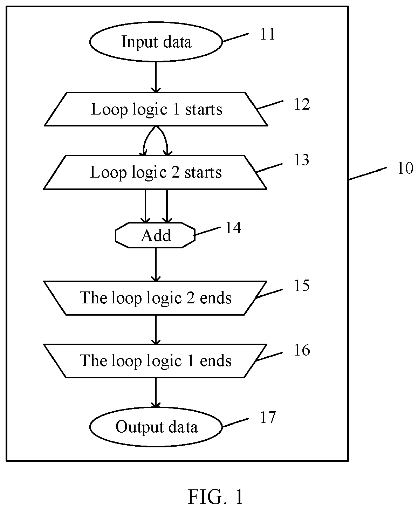

For example, FIG. 1 is a schematic diagram of a computational graph.

As shown in FIG. 1, a computational graph 10 shown in FIG. 1 includes seven nodes: a node 11, a node 12, a node 13, a node 14, a node 15, a node 16, and a node 17.

The node 11 indicates input data of the computational graph 10, and the node 17 indicates output data obtained after an operation of each node in the computational graph 10 is performed on the input data.

The node 12 and the node 16 represent first-layer loop logic in the computational graph 10. The node 12 is a start point of the first-layer loop logic, and the node 16 is an end point of the first-layer loop logic.

The node 13 and the node 15 represent second-layer loop logic in the computational graph 10. The node 13 is a start point of the second-layer loop logic, and the node 15 is an end point of the second-layer loop logic.

It can be seen from FIG. 1 that the second-layer loop logic is nested inside the first-layer loop logic. In this case, the first-layer loop logic may be referred to as outer loop logic relative to the second-layer loop logic, and the second-layer loop logic may be referred to as inner loop logic relative to the first-layer loop logic.

The node 14 represents an operation that needs to be performed inside the loop logic in the computational graph 10, for example, an addition operation shown in FIG. 1.

In addition, as shown in FIG. 1, directed edges used to connect the seven nodes in FIG. 1 indicate a flow direction of data in the computational graph 10.

It should be understood that one computational graph may include a plurality of subgraphs, different subgraphs are formed by different nodes and edges, and different subgraphs are connected by using different logical relationships or operations, to implement a logical function that can be implemented by the computational graph.

### (2) Graph transformation manner

The graph transformation manner usually indicates to perform a preset operation on a given computational graph.

It should be understood that one graph transformation manner corresponds to only one given computational graph. Different graph transformation manners may correspond to a same given computational graph.

The preset operation may be an operation of performing loop tiling (tile) on loop logic in the given computational graph by using a preset step, may be an operation of performing loop interchange (interchange) on loop logic in the given computational graph, may be an operation of performing loop collapse (collapse) on loop logic in the given computational graph, may be an operation of eliminating redundant variables in the given computational graph, or the like, and is not limited thereto.

The preset step may be a quantity of cycles of single-layer loop logic. A specific value of the preset step is not limited in embodiments of this application. For example, the preset step may be 16, that is, the quantity of cycles of the single-layer loop logic is 16. Certainly, the preset step may alternatively be 128, that is, the quantity of cycles of the single-layer loop logic is 128, and so on.

It should be understood that for loop logic that includes only single-layer loop logic, a step of the loop logic is a quantity of cycles of the single-layer loop logic. For loop logic that includes a plurality of layers of nested loop logic, a step of the loop logic is a quantity of cycles of innermost loop logic in the plurality of layers of nested loop logic.

For example, if a graph transformation manner 1 indicates to perform a loop tiling operation on loop logic 1 in a given computational graph by using a step of 16 bits, that is, the graph transformation manner 1 indicates to tile the loop logic 1 in the given computational graph into two or more pieces of loop logic. The two or more pieces of loop logic are sequentially nested, and a quantity of cycles of innermost nested loop logic is 16, that is, a loop step of the two or more pieces of sequentially nested loop logic is 16.

For example, if a quantity of cycles of the loop logic 1 is 32, the loop logic 1 may be tiled into subloop logic 1 and subloop logic 2 based on the graph transformation manner 1. The subloop logic 2 may be nested inside the subloop logic 1. In addition, a quantity of cycles of the subloop logic 2 that is used as the inner loop logic is 16, and a quantity of cycles of the subloop logic that is used as the outer loop logic is 2.

For another example, a graph transformation manner 2 may indicate to perform a loop interchange operation on loop logic 1 and loop logic 2 in a given computational graph.

For example, the loop logic 1 and the loop logic 2 in the given computational graph are nested two-layer loop logic, the outer loop logic is the loop logic 1, and the inner loop logic is the loop logic 2. In this case, the given computational graph is transformed in the graph transformation manner 2, so that the outer loop logic and the inner loop logic can be exchanged. That is, after the given computational graph is transformed in the graph transformation manner 2, the outer loop logic is the loop logic 2, and the inner loop logic is the loop logic 1.

For another example, a graph transformation manner 3 may indicate to perform a loop collapse operation on loop logic 1 and loop logic 2 in a given computational graph, so as to collapse nested two-layer loop logic into single-layer loop logic. The loop logic 1 may be the inner loop logic of the loop logic 2, or the loop logic 2 is the inner loop logic of the loop logic 1.

For example, the loop logic 1 and the loop logic 2 in the given computational graph are nested two-layer loop logic, a variable in the loop logic 1 is x, and a variable in the loop logic 2 is y. In this case, after the given computational graph is transformed in the graph transformation manner 3, the nested loop logic 1 and loop logic 2 are collapsed into single-layer loop logic, and the single-layer loop logic includes the variable x and the variable y.

For another example, a graph transformation manner 4 may indicate to eliminate a redundant variable 1 in a given computational graph. Alternatively, the graph transformation manner 4 may indicate to eliminate a redundant variable 2 in the given computational graph, or the like.

### (3) Other terms

In embodiments of this application, the word "example" or "for example" represents giving an example, an illustration, or a description. Any embodiment or design scheme described as an "example" or "for example" in embodiments of this application should not be explained as being more preferred or having more advantages than another embodiment or design scheme. Exactly, use of the word "example", "for example" or the like is intended to present a relative concept in a specific manner.

The terms "first" and "second" in embodiments of this application are merely intended for a purpose of description, and shall not be understood as an indication or implication of relative importance or implicit indication of a quantity of indicated technical features. Therefore, a feature limited by "first" or "second" may explicitly or implicitly include one or more features. In the descriptions of this application, unless otherwise stated, "a plurality of" means two or more than two.

In this application, the term "at least one" means one or more, and the term "a plurality of" in this application means two or more. For example, a plurality of second packets mean two or more second packets. Terms "system" and "network" may be used interchangeably in this specification.

It should be understood that the terms used in the descriptions of various examples in this specification are merely intended to describe specific examples, but are not intended to constitute a limitation. The terms "one" ("a" and "an") and "the" of singular forms used in the descriptions of various examples and the appended claims are also intended to include plural forms, unless otherwise specified in the context clearly.

It should be further understood that, the term "and/or" used in this specification indicates and includes any or all possible combinations of one or more items in associated listed items. The term "and/or" describes an association relationship between associated objects and represents that three relationships may exist. For example, A and/or B may represent the following three cases: Only A exists, both A and B exist, and only B exists. In addition, the character "/" in this application generally indicates an "or" relationship between the associated objects.

It should be further understood that sequence numbers of processes do not mean execution sequences in embodiments of this application. The execution sequences of the processes should be determined based on functions and internal logic of the processes, and should not be construed as any limitation on the implementation processes of embodiments of this application.

It should be understood that determining B based on A does not mean that B is determined based on only A, and B may alternatively be determined based on A and/or other information.

It should be further understood that the term "include" (or referred to as "includes", "including", "comprises", and/or "comprising"), when being used in this specification, specifies the presence of stated features, integers, steps, operations, elements, and/or components, but does not preclude the presence or addition of one or more other features, integers, steps, operations, elements, components, and/or groups thereof.

It should be further understood that the term "if" may be interpreted as a meaning "when" ("when" or "upon"), "in response to determining", or "in response to detecting". Similarly, according to the context, the phrase "if it is determined that" or "if (a stated condition or event) is detected" may be interpreted as a meaning of "when it is determined that", "in response to determining", "when (a stated condition or event) is detected", or "in response to detecting (a stated condition or event)".

It should be understood that "one embodiment", "an embodiment", and "a possible implementation" mentioned in the entire specification mean that particular features, structures, or characteristics related to an embodiment or the implementations are included in at least one embodiment of this application. Therefore, "in one embodiment", "in an embodiment", or "in a possible implementation" appearing throughout this specification does not necessarily mean a same embodiment. In addition, these particular features, structures, or characteristics may be combined in one or more embodiments by using any appropriate manner.

When an application developed based on a computing system (for example, a computing system a) runs on another computing system (for example, a computing system b), because architecture designs of different computing systems are different, when the application runs on the computing system b, performance of the application is not optimal, for example, execution efficiency is low.

That is, when an application developed based on a computing system is migrated to another computing system for running, a problem of low application performance occurs.

In this case, application code can generally be optimized, so that the application can run at optimal performance on the computing system b.

To implement optimal running of an application on different computing systems, a computational graph may generally be transformed in a graph transformation manner designed based on the different computing systems, so as to optimize the computational graph corresponding to the application. In this way, an optimized application can be obtained by converting and optimizing the computational graph according to a computational graph transformation rule. It should be understood that the optimized application can run optimally on the different computing systems.

For example, an application a developed based on the computing system a needs to be migrated to the computing system b for running. In this case, graph transformation may be performed on a computational graph corresponding to the application a in a graph transformation manner designed based on the computing system b, so as to implement optimization of the computational graph corresponding to the application a, and further implement optimization of the application a. In this way, an optimized application a can run optimally on the computing system b.

It should be understood that, because a computational graph transformation manner can implement decoupling of an application from a computing system, when the application is optimized by using the computational graph transformation manner, the optimization efficiency is high compared with that when source code of the application is separately optimized for different computing systems.

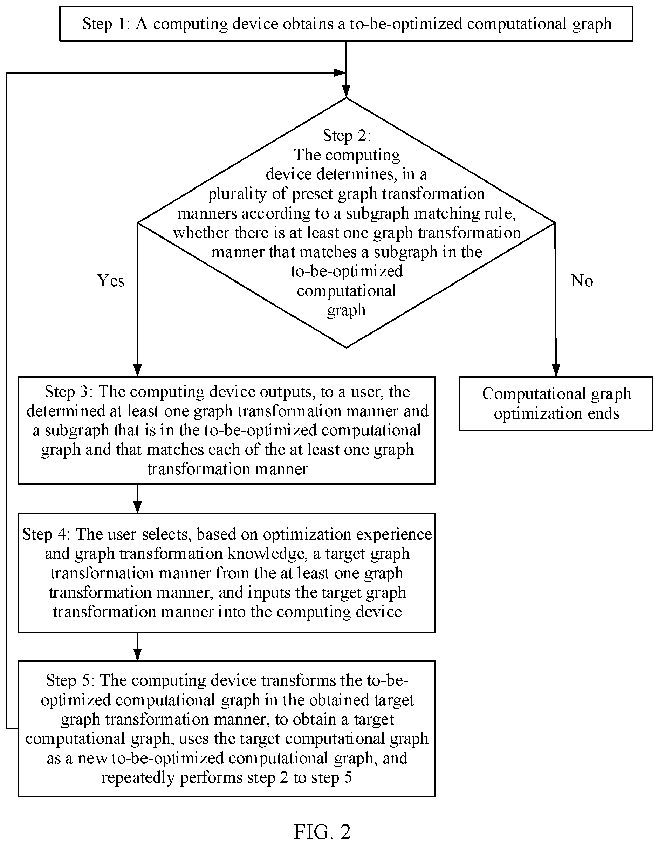

FIG. 2 shows a computational graph optimization method. As shown in FIG. 2, the method may be performed by any computing device with a computing processing capability, and the method may include the following steps.

Step 1: A computing device obtains a to-be-optimized computational graph.

Step 2: The computing device determines, in a plurality of preset graph transformation manners according to a subgraph matching rule, whether there is at least one graph transformation manner that matches a subgraph in the to-be-optimized computational graph.

Step 2 to Step 4 are performed if there is at least one graph transformation manner that matches the subgraph in the to-be-optimized computational graph. The computational graph optimization ends if there is no at least one graph transformation manner that matches the subgraph in the to-be-optimized computational graph.

For detailed descriptions of how the computing device determines, in the plurality of preset graph transformation manners according to the subgraph matching rule, whether there is at least one graph transformation manner that matches the subgraph in the to-be-optimized computational graph, refer to the following description. Details are not described herein again.

Step 3: The computing device outputs, to a user, the determined at least one graph transformation manner and a subgraph that is in the to-be-optimized computational graph and that matches each of the at least one graph transformation manner.

Step 4: The user selects, based on optimization experience and graph transformation knowledge, a target graph transformation manner from the at least one graph transformation manner, and inputs the target graph transformation manner into the computing device.

In response, the computing device obtains the target graph transformation manner.

Step 5: The computing device transforms the to-be-optimized computational graph in the obtained target graph transformation manner, to obtain a target computational graph, uses the target computational graph as a new to-be-optimized computational graph, and repeatedly performs step 2 to step 5.

It can be learned that, in the computational graph optimization method described in FIG. 2, a plurality of iterative transformations is performed on the to-be-optimized computational graph by using the plurality of preset graph transformation manners, to implement iterative optimization of the to-be-optimized computational graph. However, in a process of iteratively optimizing the computational graph, in this method, when determining a target graph transformation manner used in each iteration, the optimization experience and graph transformation manner knowledge of the user are relied on, and consequently optimization efficiency is low.

In addition, when computational graph optimization is performed by using the method described in FIG. 2, a problem that a loop of iterative transformation cannot converge is easily caused. This is because it is difficult for the user to exclude some invalid graph transformation manners, for example, a graph transformation manner that may cause an optimization rollback, when determining the target graph transformation manner. In this case, the loop of the iterative transformation of the method described in FIG. 2 cannot converge, and further, the computational graph cannot be optimized.

An iterative transformation rollback means that a previous graph transformation manner and a subsequent graph transformation manner that are used to transform any subgraph in the computational graph are mutually inverse, so that a subgraph that is successively transformed by using the previous graph transformation manner and the subsequent graph transformation manner is the same as a subgraph that is not successively transformed by using the previous graph transformation manner and the subsequent graph transformation manner. The previous graph transformation manner and the subsequent graph transformation manner may be continuous, or may be discontinuous. This is not limited.

That the graph transformation manners are mutually inverse means that operations performed on a same object in a given computational graph in the two graph transformation manners are mutually inverse. In this way, after the computational graph is transformed by using two inverse graph transformation manners, a structure of the computational graph remains unchanged.

For example, a graph transformation manner 1 indicates to expand a loop logic 1 in a given computational graph into a loop logic 11 and a loop logic 12, and a graph transformation manner 2 indicates to collapse the loop logic 11 and the loop logic 12 in the given computational graph into the loop logic 1. In this case, the graph transformation manner 1 and the graph transformation manner 2 are mutually inverse. That is, after the given computational graph is transformed in the graph transformation manner 1 and the graph transformation manner 2, a structure of the given computational graph remains unchanged.

In this way, when a computational graph is iteratively optimized, for a c^{th} iterative transformation, a subgraph a1 in a computational graph a is transformed into a subgraph a2 by using the graph transformation manner 1. Then, in a (c+1)^{th} iterative transformation, the subgraph a2 is transformed in the graph transformation manner 2 that is mutually inverse to the graph transformation manner 1, and an obtained subgraph is the subgraph a1. In this case, the iterative transformation rollback occurs in the process of iteratively optimizing the computational graph.

Based on this, an embodiment of this application provides a computational graph optimization method. In the method, automatic optimization and iterative transformation are combined to implement automation of computational graph optimization. In addition, in a process of computational graph optimization, an invalid graph transformation manner is removed by using a pruning policy, so that a problem that a loop of iterative transformation cannot converge due to an iterative transformation rollback can be avoided.

An embodiment of this application further provides a computational graph optimization apparatus. The computational graph optimization apparatus is configured to implement the foregoing computational graph optimization method. The computational graph optimization apparatus may be any computing device with a computing processing capability. The computing device may be, for example, a computer, a PC, a notebook computer, or a server. This is not limited.

Optionally, the foregoing computational graph optimization method may be implemented by using an application (application, app) installed on the computing device, for example, a client application of the computational graph optimization apparatus, or a browser.

The application may be an embedded application (namely, a system application of the computing device) installed on the computing device, or may be a downloadable application.

The embedded application is an application provided by an operating system of the computing device (such as a computer or a mobile phone). For example, the embedded application may be an application installed on the computing device before delivery.

The downloadable application is an application that can provide its own communication connection (for example, an internet protocol multimedia subsystem (internet protocol multimedia subsystem, IMS) connection). The downloadable application is an app that may be pre-installed on the computing device, or may be a third-party app that is downloaded by a user and installed on the computing device. For example, the downloadable application may be a computational graph optimization app, an application optimization app that includes a computational graph optimization function module, or the like.

Optionally, the foregoing computational graph optimization method may be a functional module of a program compiler. In this way, when compiling source code of an application into machine-executable code, the program compiler may simultaneously optimize a computational graph corresponding to the application, to optimize the application. This is not limited.

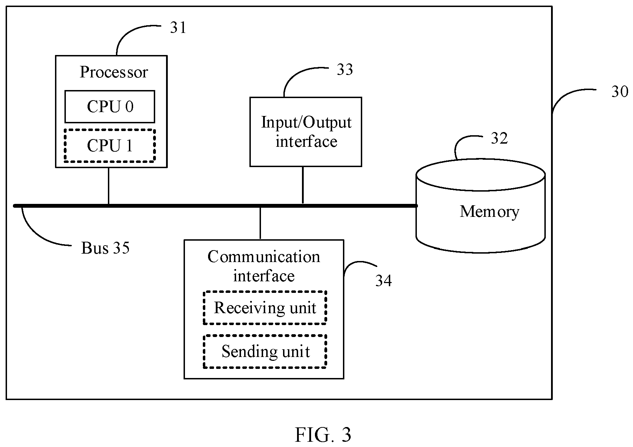

FIG. 3 is a schematic diagram of a structure of a computing device 30. As shown in FIG. 3, the computing device 30 includes a processor 31, a memory 32, an input/output interface 33, a communication interface 34, and a bus 35. The processor 31, the memory 32, the input/output interface 33, and the communication interface 34 may be connected through the bus 35.

The processor 31 is a control center of the computer device 30, and may be a general-purpose central processing unit (central processing unit, CPU), another general-purpose processor, or the like. The general-purpose processor may be a microprocessor, any conventional processor, or the like.

In an example, the processor 31 may include one or more CPUs, for example, a CPU 0 and a CPU 1 that are shown in FIG. 3.

The memory 32 may be a read-only memory (read-only memory, ROM) or another type of static storage device capable of storing static information and instructions, or a random access memory (random access memory, RAM) or another type of dynamic storage device capable of storing information and instructions; or may be an electrically erasable programmable read-only memory (electrically erasable programmable read-only memory, EEPROM), a magnetic disk storage medium or another magnetic storage device, or any other medium capable of carrying or storing expected program code in a form of an instruction or a data structure and capable of being accessed by a computer. However, this is not limited herein.

In a possible implementation, the memory 32 may be independent of the processor 31. The memory 32 may be connected to the processor 31 through the bus 35, and is configured to store data, instructions, or program code. When invoking and executing the instructions or the program code stored in the memory 32, the processor 31 can implement the computational graph optimization method provided in embodiments of this application.

In another possible implementation, the memory 32 may alternatively be integrated with the processor 31.

The input/output interface 33 is configured to implement human-computer interaction between a user and the computing device 30, for example, implement text interaction or voice interaction between a user and the computing device.

For example, the input/output interface 33 may be a touchscreen, a keyboard, a mouse, or the like, and text interaction between the user and the computing device may be implemented by using the touchscreen, the keyboard, or the mouse.

For another example, the input/output interface 33 may alternatively be an audio module, and the audio module may include a speaker, a microphone, and the like. Certainly, this is not limited herein. In this way, the audio module can implement voice interaction between the user and the computing device.

The communication interface 34 is configured to connect the computer device 30 to another device (such as a server) through a communication network. The communication network may be the Ethernet, a radio access network (radio access network, RAN), a wireless local area network (wireless local area network, WLAN), or the like. The communication interface 34 may include a receiving unit configured to receive data and a sending unit configured to send data.

The bus 35 may be an industry standard architecture (Industry Standard Architecture, ISA) bus, a peripheral component interconnect (Peripheral Component Interconnect, PCI) bus, an extended industry standard architecture (Extended Industry Standard Architecture, EISA) bus, or the like. The bus may be classified into an address bus, a data bus, a control bus, and the like. For ease of representation, only one thick line represents the bus in FIG. 3, but this does not indicate that there is only one bus or only one type of bus.

It should be noted that a structure shown in FIG. 3 does not constitute a limitation on the computing device 30. In addition to the components shown in FIG. 3, the computer device 30 may include more or fewer components than those shown in the figure, or some components may be combined, or different component arrangements may be used.

The following describes in detail the computational graph optimization method provided in embodiments of this application with reference to the accompanying drawings.

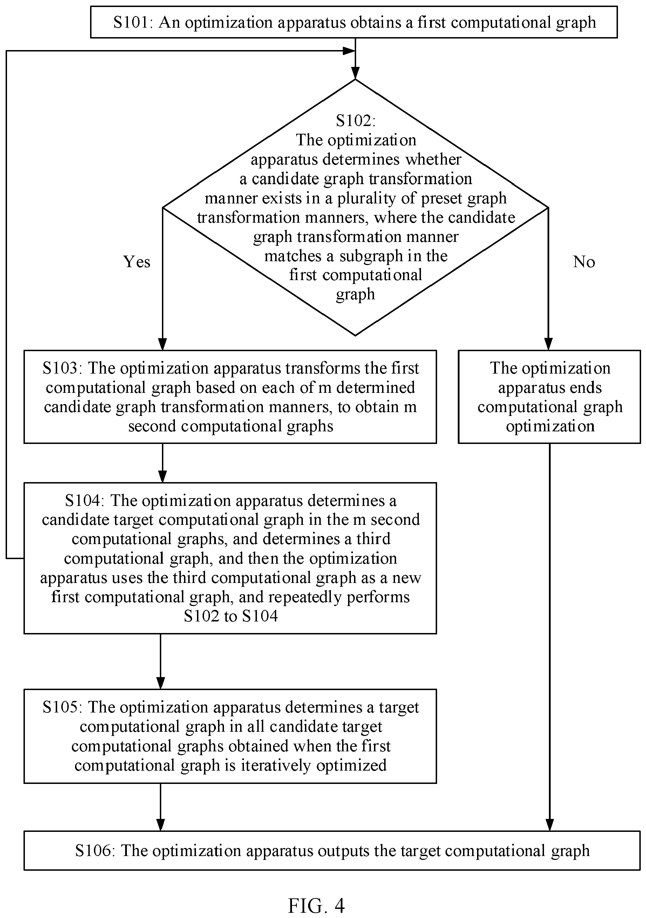

FIG. 4 is a schematic flowchart of a computational graph optimization method according to an embodiment of this application. The method may be applied to a computational graph optimization apparatus. The computational graph optimization apparatus may be implemented by the computing device 30 shown in FIG. 3. Specifically, the processor 31 of the computing device 30 performs the following related steps. For a brief description, in the following embodiments of this application, the "computational graph optimization apparatus" is referred to as an "optimization apparatus" for short. The method includes the following steps.

S101: Obtain a first computational graph.

The first computational graph is a computational graph obtained after to-be-optimized code is converted according to a preset conversion rule. The first computational graph includes a plurality of subgraphs.

The to-be-optimized code may be source code of an application that needs to migrate a computing system, or may be source code of a function module in an application that needs to migrate a computing system, or may be any source code that can implement a specific function and that needs to migrate a computing system, or source code of an application that requires performance optimization. This is not limited. The application that requires performance optimization may be an application that needs to improve running efficiency. This is not limited. The application may be a high performance computing (high performance computing, HPC) application, a cloud computing application, an artificial intelligence (artificial intelligence, AI) application, or the like. This is not limited.

The preset conversion rule is a preset computational graph conversion rule, and is used to convert code into a computational graph. The preset conversion rule is not specifically limited in this embodiment of this application.

In a possible implementation, an optimization apparatus may first obtain the to-be-optimized code, and then convert the to-be-optimized code according to the foregoing preset conversion rule, to obtain the first computational graph.

The optimization apparatus may receive, through an input/output interface (for example, the input/output interface 33 shown in FIG. 3), to-be-optimized code entered by a user, or may receive, through a communication interface (for example, the communication interface 34 shown in FIG. 3), to-be-optimized code sent by another device. A specific manner in which the optimization apparatus obtains the to-be-optimized code is not limited in this embodiment of this application.

In this case, optionally, the optimization apparatus may be preset with the foregoing preset conversion rule. In this way, the optimization apparatus may convert the obtained to-be-optimized code according to the preset conversion rule, to obtain the first computational graph, that is, the optimization apparatus obtains the first computational graph.

Optionally, the optimization apparatus may receive, through the input/output interface (for example, the input/output interface 33 shown in FIG. 3), a preset conversion rule input by the user. In this way, the optimization apparatus can convert the obtained to-be-optimized code according to the received preset conversion rule, to obtain the first computational graph, that is, the optimization apparatus obtains the first computational graph.

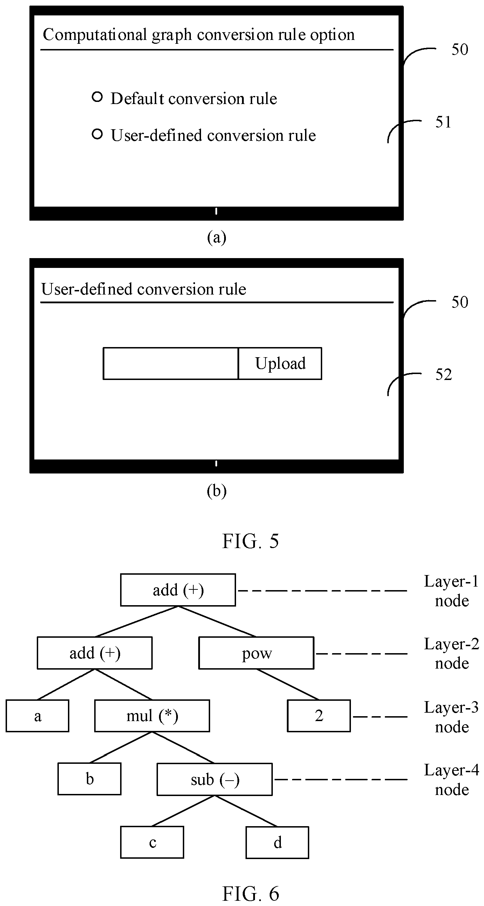

For example, FIG. 5 is a schematic diagram in which the optimization apparatus obtains the preset conversion rule.

As shown in (a) in FIG. 5, when the method in this embodiment of this application starts to be executed, a computational graph conversion rule option interface 51 may be displayed on a display interface 50 of the optimization apparatus. The computational graph conversion rule option interface 51 includes two options: "default conversion rule" and "user-defined conversion rule".

When the user selects the option "default conversion rule" by operating an input interface such as a mouse or a keyboard of the optimization apparatus, it indicates that the user indicates the optimization apparatus to convert the to-be-optimized code according to a preset computational graph conversion rule, to obtain the first computational graph.

It should be understood that the computational graph conversion rule preset in the optimization apparatus herein may be the foregoing preset conversion rule.

When the user selects the option "user-defined conversion rule" by operating the input interface such as the mouse or the keyboard of the optimization apparatus, it indicates that the user indicates the optimization apparatus to convert the to-be-optimized code according to a user-defined computational graph conversion rule, to obtain the first computational graph.

In this case, as shown in (b) in FIG. 5, the user may further upload the user-defined computational graph conversion rule on a user-defined conversion rule interface 52. Correspondingly, the optimization apparatus obtains the computational graph conversion rule, and may convert the obtained to-be-optimized code according to the computational graph conversion rule, to obtain the first computational graph.

In another possible implementation, any computing device with a computing processing capability may convert the to-be-optimized code according to the preset conversion rule, to obtain the first computational graph.

In this case, optionally, the computing device may send the first computational graph to the optimization apparatus through the communication interface of the computing device. In response, the optimization apparatus may receive the first computational graph by using a receiving unit in the communication interface (for example, the communication interface 34 shown in FIG. 3) of the optimization apparatus, that is, the optimization apparatus obtains the first computational graph.

Optionally, the user may input, into the optimization apparatus through the input/output interface (for example, the input/output interface 33 shown in FIG. 3) of the optimization apparatus, the first computational graph obtained by converting, by the computing device according to the preset conversion rule. Correspondingly, the optimization apparatus obtains the first computational graph.

S102: Determine whether a candidate graph transformation manner exists in a plurality of preset graph transformation manners, where the candidate graph transformation manner matches a subgraph in the first computational graph.

Specifically, the optimization apparatus may determine, according to a subgraph matching rule, whether the candidate graph transformation manner exists in the plurality of preset graph transformation manners.

The subgraph matching rule indicates a logical relationship of a given computational graph corresponding to a graph transformation manner. Therefore, one graph transformation manner corresponds to only one subgraph matching rule. Because different graph transformation manners may correspond to a same given computational graph, the plurality of preset graph transformation manners may correspond to one or more subgraph matching rules. This is not limited.

For any one of the plurality of preset graph transformation manners, a subgraph matching rule corresponding to the any preset graph transformation manner is used to determine, in the first computational graph, whether a subgraph matching the any preset graph transformation manner exists.

If the optimization apparatus determines that any subgraph in the first computational graph has a same graph structure as a given computational graph corresponding to the any preset graph transformation manner, and a logical relationship in the any subgraph meets a subgraph matching rule corresponding to the any preset graph transformation manner, the optimization apparatus determines that the any subgraph is the subgraph matching the any preset graph transformation manner, that is, the subgraph matching the any preset graph transformation manner exists in the first computational graph.

For example, a preset graph transformation manner 1 indicates to perform a preset operation on a given computational graph 1, that is, a given computational graph corresponding to the preset graph transformation manner 1 is the given computational graph 1. In addition, a subgraph matching rule corresponding to the preset graph transformation manner 1 is a subgraph matching rule 1. In this case, if the optimization apparatus determines that a subgraph 1 in the first computational graph has a same graph structure as the given computational graph 1, and a logical relationship in the subgraph 1 meets the subgraph matching rule 1, the optimization apparatus determines that the subgraph 1 is a subgraph matching the preset graph transformation manner 1.

In this way, when the optimization apparatus determines, according to the subgraph matching rule, that a subgraph matching the any preset graph transformation manner exists in the first computational graph, the optimization apparatus determines the any preset graph transformation manner as a candidate graph transformation manner.

For m preset graph transformation manners in the plurality of preset graph transformation manners, when the optimization apparatus determines, according to a subgraph determining rule, that a subgraph matching the m preset graph transformation manners exists in the first computational graph, the optimization apparatus determines the m preset graph transformation manners as m candidate graph transformation manners, where m is a positive integer.

The m candidate graph transformation manners may match a same subgraph, or may match different subgraphs. This is not limited in this embodiment of this application.

That is, when there is a candidate graph transformation manner in the plurality of preset graph transformation manners, the optimization apparatus performs S102 to S104.

When the optimization apparatus determines, according to the subgraph determining rule, that the subgraph matching the any preset graph transformation manner does not exist in the first computational graph, it indicates that no candidate graph transformation manner exists in the plurality of preset graph transformation manners. That is, the optimization apparatus determines, according to the subgraph matching rule, that no candidate graph transformation manner exists in the plurality of preset graph transformation manners.

In this case, the optimization apparatus ends the computational graph optimization process, that is, a loop of iteratively optimizing the first computational graph converges. For a description of a process of iteratively optimizing the first computational graph, refer to the following description. Details are not described herein again.

The plurality of preset graph transformation manners and a subgraph matching rule corresponding to the plurality of preset graph transformation manners may be graph transformation manners and a corresponding subgraph matching rule that are preset in the optimization apparatus, or may be graph transformation manners and a corresponding subgraph matching rule that are input by the user and received by the optimization apparatus through the input/output interface. This is not limited.

Certainly, a part of the preset graph transformation manners in the plurality of preset graph transformation manners and a subgraph matching rule corresponding to the part of the preset graph transformation manners may be graph transformation manners and a corresponding subgraph matching rule that are preset in the optimization apparatus. The other part of the preset graph transformation manners in the plurality of preset graph transformation manners and a subgraph matching rule corresponding to the other part of the preset graph transformation manners may be graph transformation manners and a corresponding subgraph matching rule that are input by the user and received by the optimization apparatus through the input/output interface. Sources of the plurality of preset graph transformation manners and the subgraph matching rule corresponding to the plurality of preset graph transformation manners are not specifically limited in this embodiment of this application.

For a process in which the optimization apparatus receives, through the input/output interface, the preset graph transformation manner and the corresponding subgraph matching rule that are input by the user, refer to the foregoing description of receiving, by the optimization apparatus through the input/output interface, the user-defined computational graph conversion rule input by the user. Details are not described again.

S103: Transform the first computational graph based on each of the m determined candidate graph transformation manners, to obtain m second computational graphs.

Specifically, the optimization apparatus transforms the first computational graph by using each of the m determined candidate graph transformation manners, to obtain the m second computational graphs.

It should be understood that, for any one of the m candidate graph transformation manners, the optimization apparatus transforms the first computational graph by using the any candidate graph transformation manner, and essentially, the any candidate graph transformation manner is used to transform a subgraph matching the any candidate graph transformation manner in the first computational graph. In this way, after performing an operation indicated by the any candidate graph transformation manner on the subgraph, the optimization apparatus can obtain a new subgraph corresponding to the subgraph.

For example, the any candidate graph transformation manner is a candidate graph transformation manner 1. The optimization apparatus transforms the first computational graph by using the candidate graph transformation manner 1, and essentially, the candidate graph transformation manner 1 is used to transform the subgraph 1 matching the candidate graph transformation manner 1 in the first computational graph. In this way, the optimization apparatus can obtain a subgraph 2 after performing an operation indicated by the candidate graph transformation manner 1 on the subgraph 1. The subgraph 2 is a new subgraph corresponding to the subgraph 1.

In this way, after the first computational graph is transformed in the any candidate graph transformation manner, the second computational graph including the new subgraph may be obtained. It can be learned that one second computational graph can be obtained after the first computational graph is transformed in one candidate graph transformation manner.

Therefore, the m second computational graphs can be obtained after the first computational graph is transformed in each of the m candidate graph transformation manners. That is, a quantity of the second computational graphs is the same as a quantity of candidate graph transformation manners, and the m second computational graphs are in a one-to-one correspondence with the m candidate graph transformation manners.

For example, if a value of m is 3, a quantity of candidate graph transformation manners determined by the optimization apparatus is 3. For example, the three candidate graph transformation manners are respectively a candidate graph transformation manner 1, a candidate graph transformation manner 2, and a candidate graph transformation manner 3. In this case, the optimization apparatus may obtain three second computational graphs after transforming the first computational graph by using each of the three candidate graph transformation manners.

Specifically, the optimization apparatus may transform the first computational graph by using the candidate graph transformation manner 1, to obtain a computational graph 1. The optimization apparatus may transform the first computational graph by using the candidate graph transformation manner 2, to obtain a computational graph 2. The optimization apparatus may transform the first computational graph by using the candidate graph transformation manner 3, to obtain a computational graph 3. The computational graph 1, the computational graph 2, and the computational graph 3 are the foregoing three second computational graphs.

It is easy to understand that a difference between the first computational graph and the second computational graph is a difference between a subgraph matching a candidate graph transformation manner in the first computational graph and a new subgraph obtained after the subgraph is transformed by using the candidate graph transformation manner. The candidate graph transformation manner may be any one of the m candidate graph transformation manners.

S104: Determine a candidate target computational graph in the m second computational graphs, and determine a third computational graph. Then, the third computational graph is used as a new first computational graph, and S102 to S104 are repeatedly performed.

Optionally, the optimization apparatus may determine the candidate target computational graph based on performance of the m second computational graphs.

The candidate target computational graph may be a computational graph with optimal performance in the m second computational graphs, that is, performance of the candidate target computational graph is better than performance of a computational graph other than the candidate target computational graph in the m second computational graphs.

That is, the m second computational graphs are obtained after subgraphs corresponding to the m candidate graph transformation manners in the first computational graph are respectively transformed based on the m candidate graph transformation manners. When applications corresponding to the m second computational graphs are executed, performance of the applications varies. The performance may be, for example, running speeds of the applications. According to the method provided in this embodiment of this application, the optimization apparatus may determine a second computational graph with optimal performance in the m second computational graphs, and use the second computational graph as a candidate target computational graph obtained through a current iterative transformation.

It should be understood that, when performance of the second computational graph is better, performance of an application corresponding to the second computational graph is better, for example, execution efficiency of the application is higher.

Optionally, the optimization apparatus may evaluate performance of the m computational graphs by determining running time of executable code corresponding to the m second computational graphs.

Specifically, the optimization apparatus may separately compile the m second computational graphs, to obtain m pieces of executable code corresponding to the m second computational graphs. The executable code is usually binary code that can be recognized and executed by a machine.

It should be understood that in this case, a compilation module is preset in the optimization apparatus. In this way, after performing S103 to obtain the m second computational graphs, the optimization apparatus may compile the m second computational graphs by using the compilation module, to obtain the m pieces of executable code corresponding to the m second computational graphs.

Then, the optimization apparatus may determine running time of the m pieces of executable code by running the m pieces of executable code.

It should be understood that running time of executable code is inversely proportional to performance of a computational graph corresponding to the executable code. In other words, shorter running time of executable code indicates better performance of a computational graph corresponding to the executable code.

In this way, the optimization apparatus may determine, as a candidate target computational graph (corresponding to a first candidate computational graph in this embodiment of this application), a second computational graph corresponding to determined executable code with the shortest running time. In other words, the optimization apparatus determines the second computational graph with optimal performance in the m second computational graphs as the candidate target computational graph.

Optionally, the optimization apparatus may separately convert the m second computational graphs into corresponding abstract syntax trees (abstract syntax tree, AST), and collect statistics on a quantity of calculation operations and a quantity of memory access operations that are of an AST corresponding to each second computational graph, to evaluate performance of the m second computational graphs.

The memory access operation includes a read (read) operation and/or a write (write) operation performed on a memory or a cache.

The m second computational graphs may be converted to obtain m ASTs, and the m second computational graphs are in a one-to-one correspondence with the m ASTs.

Any second computational graph in the m second computational graphs is used as an example. The optimization apparatus may convert the any second computational graph into program code through conversion reverse to the foregoing described preset conversion rule. Then, the optimization apparatus may construct, based on the program code, an AST corresponding to the any second computational graph. For a related description of the preset conversion rule, refer to the foregoing description. Details are not described herein again. A process of constructing the AST based on the program code is not described in detail in this embodiment of this application.

Then, the optimization apparatus collects statistics on a quantity of calculation operations and a quantity of memory access operations that are of the AST corresponding to the any second computational graph. In this way, the optimization apparatus can evaluate performance of the second computational graph based on the quantity of calculation operations and the quantity of memory access operations that are of the AST corresponding to the any second computational graph.

It should be understood that, a smaller quantity of calculation operations and a smaller quantity of memory access operations that are of the AST indicate higher code execution efficiency of an application corresponding to the AST. In this case, it indicates that performance of the second computational graph corresponding to the AST is better. Similarly, a larger quantity of calculation operations and a larger quantity of memory access operations that are of the AST indicate lower code execution efficiency of the application corresponding to the AST. In this case, it indicates that performance of the second computational graph corresponding to the AST is poorer.

In other words, in the m ASTs obtained by converting the m second computational graphs, a second computational graph corresponding to an AST with a largest quantity of calculation operations and a largest quantity of memory access operations is a computational graph with worst performance in the m second computational graphs. Similarly, in the m ASTs obtained by converting the m second computational graphs, a second computational graph corresponding to an AST with a smallest quantity of calculation operations and a smallest quantity of memory access operations is a computational graph with optimal performance in the m second computational graphs.

In this way, the optimization apparatus may determine, as the candidate target computational graph (corresponding to the first candidate computational graph in this embodiment of this application), the second computational graph corresponding to the AST with the smallest quantity of calculation operations and the smallest quantity of memory access operations. In other words, the optimization apparatus determines the second computational graph with optimal performance in the m second computational graphs as the candidate target computational graph.

FIG. 6 is a schematic diagram of collecting statistics on a quantity of calculation operations and a quantity of memory access operations that are of an AST. An AST 60 represents a formula [a + b × (c - d) + 2²].

As shown in FIG. 6, a layer-1 node of the AST 60 includes one calculation operation and three memory access operations. The one calculation operation includes one add (add) operation. The three memory access operations include two read operations and one write operation.

The two read operations include two read operations performed to read, from a memory/cache, two values on which an add operation needs to be performed. The two values on which an add operation needs to be performed include a result of [*b* × (*c* - d)], and a result of 2². The one write operation includes one write operation for writing a result of the add operation to the memory/cache.

A layer-2 node of the AST 60 includes two calculation operations and five memory access operations. The two calculation operations include one add operation and one square operation (that is, an exponential operation whose exponent (pow) is 2). The five memory access operations include three read operations and two write operations.

The three read operations include two read operations performed to read, from the memory/cache, two values on which an add operation needs to be performed and one operation of reading, from the memory/cache, a value on which a pow operation needs to be performed. The two values on which an add operation needs to be performed include a, and a result of [*b* × (*c* - d)].

The two write operations include one write operation for writing a result of the add operation to the memory and one operation of writing a result of the pow operation to the memory.

A layer-3 node of the AST 60 includes one calculation operation and three memory access operations. The one calculation operation includes one multiply (mul) operation. The three memory access operations include two read operations and one write operation.

The two read operations include two read operations performed to read, from the memory/cache, two values on which a mul operation needs to be performed. The two values on which a mul operation needs to be performed include b, and a result of (*c* - d). The one write operation includes one write operation for writing a result of the mul operation to the memory/cache.

A layer-4 node of the AST 60 includes one calculation operation and three memory access operations. The one calculation operation includes one subtraction (sub) operation. The three memory access operations include two read operations and one write operation.

The two read operations include two read operations performed to read, from the memory/cache, two values on which a sub operation needs to be performed. The two values on which a sub operation needs to be performed include c and d. The one write operation includes one write operation for writing a result of the sub operation to the memory/cache.

In this way, a coefficient of calculation operations and a coefficient of memory access operations that are of each layer in the AST 60 are counted, to obtain the quantity of calculation operations and the quantity of memory access operations that are of the AST 60. It can be learned from the foregoing description that the quantity of calculation operations and the quantity of memory access operations that are of the AST 60 are respectively: the quantity of calculation operations = 1 + 2 + 1 + 1 = 5, and the quantity of memory access operations = 3 + 5 + 3 + 3 = 14. That is, the quantity of calculation operations of the AST 60 is 5, and the quantity of memory access operations of the AST 60 is 14.

Then, the optimization apparatus may select one or more computational graphs from the m second computational graphs as the third computational graph, that is, determine the third computational graph from the m second computational graphs. The third computational graph is used as a to-be-optimized computational graph in a next iterative transformation of a current iterative transformation in an iterative optimization method provided in this embodiment of this application.

In a possible implementation, the optimization apparatus may sort the m second computational graphs in descending order of performance based on performance evaluation results of the m second computational graphs. In this way, the optimization apparatus may determine top p second computational graphs as the third computational graph, where p is a positive integer less than or equal to m.

Optionally, it can be learned from the foregoing description that shorter running time of executable code corresponding to the second computational graph indicates better performance of the second computational graph. Therefore, the optimization apparatus may sort the running time of the m pieces of executable code corresponding to the m second computational graphs in ascending order, so that the m second computational graphs can be sorted in descending order of performance.

Optionally, it can be learned from the foregoing description that a larger quantity of calculation operations and a larger quantity of memory access operations of the AST indicate poorer performance of the second computational graph corresponding to the AST. Therefore, the optimization apparatus may sort, in ascending order, the counted quantity of calculation operations and the counted quantity of memory access operations that are of the m ASTs corresponding to the m second computational graphs, so that the m second computational graphs can be sorted in descending order of performance.

In this way, the optimization apparatus may determine, as the third computational graph, p second computational graph corresponding to top p ASTs in the m ASTs in terms of the quantity of calculation operations and the quantity of memory access operations.

It can be learned that there may be one third computational graph. In this case, the third computational graph is a second computational graph with optimal performance in the m second computational graphs. Certainly, there may alternatively be a plurality of third computational graphs, for example, p third computational graphs. In this case, the p third computational graphs are top p second computational graphs in the m second computational graphs that are sorted in descending order of performance.

In another possible implementation, the optimization apparatus may alternatively determine any one or more of the m second computational graphs as the third computational graph. This is not limited in this embodiment of this application.

After determining the third computational graph, the optimization apparatus uses the third computational graph as a new first computational graph, and repeatedly performs S102 to S104 until the optimization apparatus determines, when performing S102, that a graph transformation manner matching the subgraph in the first computational graph does not exist in the plurality of preset graph transformation manners.

It can be learned that the optimization apparatus may repeatedly perform steps S102 to S104, to implement an iterative transformation of the first computational graph. It should be understood that, after one transformation is performed on the first computational graph in a candidate graph transformation manner that is determined by the optimization apparatus and that matches the first computational graph, optimization is performed once. In this way, the first computational graph is iteratively transformed, that is, the first computational graph is iteratively optimized.

That is, for any iterative transformation of a plurality of iterative transformations, the optimization apparatus may select, based on a search policy, a to-be-optimized computational graph in a next iterative transformation of the any iterative transformation from a plurality of computational graphs obtained through the any iterative transformation. Then, based on the foregoing plurality of preset graph transformation manners, the optimization apparatus repeatedly performs steps S102 to S104, so that the plurality of iterative transformations can be performed on the to-be-optimized computational graph in the next iterative transformation, to obtain an optimized target computational graph.

The search policy may be sorting the plurality of computational graphs in descending order of performance based on performance of the plurality of computational graphs obtained through the any iterative transformation, to select one or more computational graphs whose performance is ranked top as the to-be-optimized computational graph in the next iterative transformation of the any iterative transformation. Certainly, the search policy may alternatively be randomly selecting, as the to-be-optimized computational graph in the next iterative transformation of the any iterative transformation, one or more computational graphs from the plurality of computational graphs obtained through the any iterative transformation.

It should be understood that the foregoing description in which the optimization apparatus determines the running time of the executable code corresponding to the m second computational graphs, and the counted quantity of calculation operations and the counted quantity of memory access operations that are of the m ASTs corresponding to the m second computational graphs, to evaluate performance of the m second computational graphs is merely an example. Alternatively, the optimization apparatus may use any other performance evaluation method to evaluate performance of the m second computational graphs. This is not limited in this embodiment of this application.

It is easy to understand that a process in which the optimization apparatus performs iterative optimization on the first computational graph includes the plurality of iterative transformations. For a first iterative transformation, that is, when the optimization apparatus performs S102 to S104 for the first time, a candidate target computational graph corresponding to the first iterative transformation, and p third computational graphs may be obtained.

For a second iterative transformation, that is, when the optimization apparatus uses a third computational graph determined in the first iterative transformation as a new first computational graph, and performs S102 to S104 for the second time, a candidate target computational graph corresponding to the second iterative transformation, and at least one third computational graph may be obtained.

By analogy, for a q^{th} iterative transformation, that is, when the optimization apparatus uses a third computational graph determined in a (q-1)^{th} iterative transformation as a new first computational graph, and performs S102 to S104 for the q^{th} time, a candidate target computational graph corresponding to the q^{th} iterative transformation, and at least one third computational graph may be obtained, where q is a positive integer.

When a value of p is 1, it indicates that the optimization apparatus may obtain one third computational graph in each iterative transformation. In this case, for two consecutive iterative transformations in the method provided in this embodiment of this application, a third computational graph obtained by performing the previous iterative transformation is a first computational graph that needs to be input for performing the subsequent iterative transformation. In addition, in this case, one candidate target computational graph is obtained through each iterative transformation.

It can be learned that, when only one third computational graph is obtained when the optimization apparatus performs any iterative transformation, it indicates that a next iterative transformation of the any iterative transformation includes only one branch iterative transformation. When a process in which the optimization apparatus iteratively optimizes the first computational graph includes q iterative transformations, the optimization apparatus may determine q candidate target computational graphs.

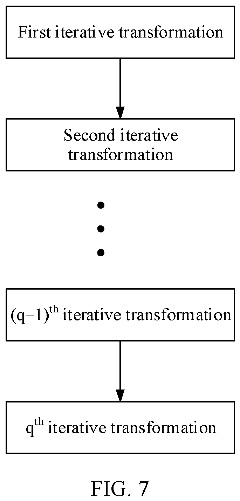

For example, FIG. 7 is a schematic diagram of implementing computational graph optimization by an optimization apparatus through a plurality of iterative transformations.

As shown in FIG. 7, after performing a first iterative transformation, the optimization apparatus obtains one third computational graph and one candidate target computational graph. In this way, the optimization apparatus may use the third computational graph as a first computational graph that needs to be input in a second iterative transformation. By analogy, after performing a (q-1)^{th} iterative transformation, the optimization apparatus obtains one third computational graph, and uses the third computational graph as a first computational graph that needs to be input in a q^{th} iterative transformation.

Because the optimization apparatus obtains one candidate target computational graph when performing each iterative transformation, the optimization apparatus may obtain a candidate target computational graph 1 after performing the first iterative transformation, may obtain a candidate target computational graph 2 after performing the second iterative transformation, ..., may obtain a candidate target computational graph q-1 after performing the (q-1)^{th} iterative transformation, and may obtain a candidate target computational graph q after performing the q^{th} iterative transformation.

When a value of p is greater than 1, it indicates that the optimization apparatus may obtain a plurality of third computational graphs in any iterative transformation. In this case, for two consecutive iterative transformations in the method provided in this embodiment of this application, a plurality of third computational graphs obtained by performing the previous iterative transformation are separately used as a plurality of first computational graphs that need to be input for performing, in parallel, a plurality of branch iterative transformations in the subsequent iterative transformation.

In other words, the subsequent iterative transformation includes a plurality of branch iterative transformations, and a first computational graph that needs to be input for each branch iterative transformation in the plurality of branch iterative transformations is a third computational graph in a plurality of third computational graphs obtained by performing the previous iterative transformation. In addition, a quantity of the plurality of branch iterative transformations is the same as a quantity of the plurality of third computational graphs obtained by performing the previous iterative transformation.

It should be understood that each branch iterative transformation in the plurality of branch iterative transformations includes steps S102 to S104. In this way, when performing each branch iterative transformation in the plurality of branch iterative transformations, the optimization apparatus may obtain one candidate target computational graph. That is, a plurality of candidate target computational graphs may be correspondingly obtained based on the plurality of branch iterative transformations.

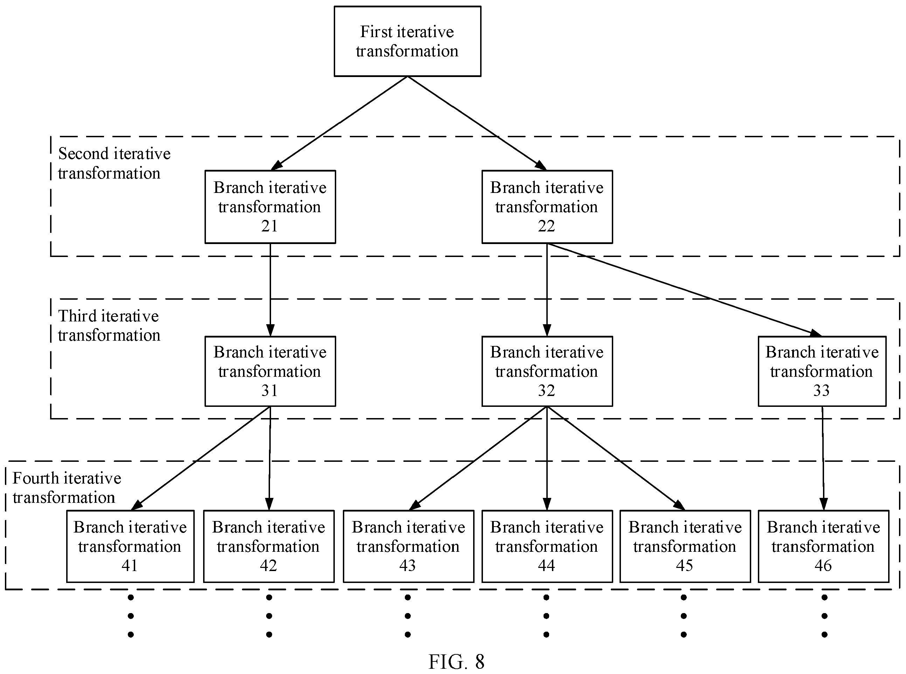

For example, FIG. 8 is another schematic diagram of implementing computational graph optimization by an optimization apparatus through a plurality of iterative transformations.

As shown in FIG. 8, if the optimization apparatus obtains two third computational graphs after performing a first iterative transformation, a second iterative transformation includes two branch iterative transformations (including a branch iterative transformation 21 and a branch iterative transformation 22). In this way, the optimization apparatus may respectively use the two third computational graphs as first computational graphs that need to be input in the two branch iterative transformations of the second iterative transformation, to implement computational graph optimization through the first iterative transformation.

For the second iterative transformation, if one third computational graph is obtained after S102 to S104 are performed in the branch iterative transformation 21, and two third computational graphs are obtained after S102 to S104 are performed in the branch iterative transformation 22, a third iterative transformation includes three (that is, 1 + 2 = 3) branch iterative transformations (including a branch iterative transformation 31, a branch iterative transformation 32, and a branch iterative transformation 33).

In this way, the optimization apparatus may use the third computational graph obtained through the branch iterative transformation 21 as a first computational graph that needs to be input in the branch iterative transformation 31 in the third iterative transformation, and may respectively use the two third computational graphs obtained through the branch iterative transformation 22 as first computational graphs that need to be input in two branch iterative transformations (including the branch iterative transformation 32 and the branch iterative transformation 33) in the third iterative transformation, to implement computational graph optimization through the second iterative transformation.

For the third iterative transformation, if two third computational graphs are obtained after S102 to S104 are performed in the branch iterative transformation 31, three third computational graphs are obtained after S102 to S104 are performed in the branch iterative transformation 32, and one third computational graph is obtained after S102 to S104 are performed in the branch iterative transformation 33, a fourth iterative transformation includes six (that is, 2 + 3 + 1 = 3) branch iterative transformations (including a branch iterative transformation 41, a branch iterative transformation 42, a branch iterative transformation 43, a branch iterative transformation 44, a branch iterative transformation 45, and a branch iterative transformation 46).

In this way, the optimization apparatus may respectively use the two third computational graphs obtained through the branch iterative transformation 31 as first computational graphs that need to be input in two branch iterative transformations (including the branch iterative transformation 41 and the branch iterative transformation 42) in the fourth iterative transformation, may respectively use the three third computational graphs obtained through the branch iterative transformation 32 as first computational graphs that need to be input in three branch iterative transformations (including the branch iterative transformation 43, the branch iterative transformation 44, and the branch iterative transformation 45) in the fourth iterative transformation, and may use the third computational graph obtained through the branch iterative transformation 33 as a first computational graph that needs to be input in the branch iterative transformation 46 in the fourth iterative transformation, to implement computational graph optimization through the third iterative transformation.

The optimization apparatus may obtain one candidate target computational graph when performing each branch iterative transformation. Therefore, for the first iterative transformation, the first iterative transformation includes only one iterative transformation, that is, it may be considered that the first iterative transformation includes only one branch iterative transformation. In this way, by performing the first iterative transformation, the optimization apparatus may obtain one candidate target computational graph, for example, obtain a candidate target computational graph 11.

For the second iterative transformation, the second iterative transformation includes two branch iterative transformations. In this way, by performing the second iterative transformation, the optimization apparatus may obtain two candidate target computational graphs, for example, obtain a candidate target computational graph 21 and a candidate target computational graph 22.

For the third iterative transformation, the third iterative transformation includes three branch iterative transformations. In this way, by performing the third iterative transformation, the optimization apparatus may obtain three candidate target computational graphs, for example, obtain a candidate target computational graph 31, a candidate target computational graph 32, and a candidate target computational graph 33.

For the fourth iterative transformation, the fourth iterative transformation includes six branch iterative transformations. In this way, by performing the fourth iterative transformation, the optimization apparatus may obtain six candidate target computational graphs, for example, obtain a candidate target computational graph 41, a candidate target computational graph 42, a candidate target computational graph 43, a candidate target computational graph 44, a candidate target computational graph 45, and a candidate target computational graph 46.

Further, the optimization apparatus may remove an invalid graph transformation manner from at least one candidate graph transformation manner determined by the optimization apparatus when performing S 102 in each iterative transformation, starting from performing the second iterative transformation.

The invalid graph transformation manner includes a graph transformation manner that has no transformation effect and a graph transformation manner that may cause an iterative transformation rollback. For the description of the iterative transformation rollback, refer to the foregoing description. Details are not described herein again.

In this way, in a process of iteratively optimizing the first computational graph, the optimization apparatus can avoid a problem that a loop of the iterative transformation cannot converge due to the iterative transformation rollback caused by the invalid graph transformation manner, so that convergence efficiency of iteratively optimizing the first computational graph is improved.

For a process in which the optimization apparatus removes the invalid graph transformation manner from the at least one candidate graph transformation manner determined by the optimization apparatus when performing S 102 in each iterative transformation, starting from performing the second iterative transformation, refer to the following description. Details are not described herein again.

S105: Determine a target computational graph in all candidate target computational graphs obtained when the first computational graph is iteratively optimized.

It can be learned from the description of S104 that, in a process in which the optimization apparatus iteratively optimizes the first computational graph, one or more candidate target computational graphs may be obtained in each iterative transformation. In this way, the optimization apparatus may determine the target computational graph in all the candidate target computational graphs obtained in a process of starting to optimize the first computational graph until the end of the iterative optimization. Performance of the target computational graph is better than performance of a candidate target computational graph other than the target computational graph in all the candidate target computational graphs.

In a possible implementation, the optimization apparatus may determine the target computational graph based on all the obtained candidate target computational graphs after the iterative optimization ends.

Optionally, after the iterative optimization ends, the optimization apparatus may determine the target computational graph based on a quantity of calculation operations and a quantity of memory access operations that are of ASTs corresponding to all the obtained candidate target computational graphs.

A quantity of calculation operations and a quantity of memory access operations that are of an AST corresponding to the target computational graph are less than a quantity of calculation operations and a quantity of memory access operations that are of an AST corresponding to the candidate target computational graph other than the target computational graph in all the candidate target computational graphs. That is, performance of the target computational graph is better than performance of the candidate target computational graph other than the target computational graph in all the candidate target computational graphs.

In another possible implementation, the optimization apparatus may determine, in an iterative optimization process, the target computational graph based on a candidate target computational graph obtained through each iterative transformation.

Optionally, the optimization apparatus may determine, in the iterative optimization process, the target computational graph based on a quantity of calculation operations and a quantity of memory access operations that are of an AST corresponding to the candidate target computational graph obtained through each iterative transformation.

For a brief description, the following uses an example in which the optimization apparatus obtains only one third computational graph after each iterative transformation is performed, to describe a process in which the optimization apparatus determines, in the iterative optimization process, the target computational graph based on the quantity of calculation operations and the quantity of memory access operations that are of the AST corresponding to the candidate target computational graph obtained through each iterative transformation. In this case, there is only one branch iterative transformation in a next iterative transformation of each iterative transformation, and the optimization apparatus may obtain only one candidate target computational graph after each iterative transformation is performed.

Specifically, the optimization apparatus may first determine, as the target computational graph, a first candidate target computational graph obtained after the first iterative transformation is performed.

Then, after obtaining a second candidate target computational graph by performing the second iterative transformation, the optimization apparatus determines whether performance of the second candidate target computational graph is better than that of the target computational graph. If the performance of the second candidate target computational graph is better than that of the target computational graph, the target computational graph is updated, that is, the second candidate target computational graph is used as a new target computational graph. If the performance of the second candidate target computational graph is worse than that of the target computational graph, the target computational graph is not updated.

Then, after obtaining a third candidate target computational graph by performing the third iterative transformation, the optimization apparatus determines whether performance of the third candidate target computational graph is better than that of a latest target computational graph. If the performance of the third candidate target computational graph is better than that of the target computational graph, the target computational graph is updated, that is, the third candidate target computational graph is used as a new target computational graph. If the performance of the third candidate target computational graph is worse than that of the target computational graph, the target computational graph is not updated.

Similarly, after obtaining a q^{th} candidate target computational graph by performing the q^{th} iterative transformation, the optimization apparatus determines whether performance of the q^{th} candidate target computational graph is better than that of a latest target computational graph. If the performance of the q^{th} candidate target computational graph is better than that of the target computational graph, the target computational graph is updated, that is, the q^{th} candidate target computational graph is used as a new target computational graph. If the performance of the q^{th} candidate target computational graph is worse than that of the target computational graph, the target computational graph is not updated.

This continues until the loop of the iterative transformation performed by the optimization apparatus converges. In this case, the latest target computational graph determined by the optimization apparatus is the target computational graph obtained after the optimization apparatus iteratively optimizes the first computational graph.

It can be learned from the foregoing description that, after performing, in any one of the plurality of iterative transformations, performance evaluation on a computational graph obtained through a transformation in at least one of the plurality of preset graph transformation manners, the optimization apparatus may determine, based on an obtained performance evaluation result, a candidate target computational graph obtained through the any iterative transformation. Then, based on all the candidate target computational graphs, a computational graph with optimal performance in the candidate target graphs may be determined as the target computational graph.

S106: Output the target computational graph.

In a possible implementation, the optimization apparatus may directly output the target computational graph to the user.

In another possible implementation, the optimization apparatus may convert the target computational graph into target code according to a conversion rule reverse to the foregoing described preset conversion rule. Then, the optimization apparatus outputs the target code to the user.

The preset conversion rule is used to convert code into a computational graph, and the conversion rule reverse to the preset conversion rule is used to convert a computational graph into code. For a related description of the preset conversion rule, refer to the foregoing description. Details are not described herein again.

In still another possible implementation, the optimization apparatus first converts the target computational graph into target code according to a conversion rule reverse to the foregoing described preset conversion rule. Then, the optimization apparatus may compile the target code, to obtain machine-executable code corresponding to the target code. Then, the optimization apparatus outputs the machine-executable code to the user.

A process of compiling the target code is not described in this embodiment of this application.

Optionally, a compilation tool may be preset in the optimization apparatus. In this way, after the optimization apparatus first converts the target computational graph into the target code according to the conversion rule reverse to the foregoing described preset conversion rule, the optimization apparatus may compile the target code based on the compilation tool, to obtain the machine-executable code corresponding to the target code.

Optionally, the optimization apparatus may obtain the compilation tool in advance. In this way, after the optimization apparatus first converts the target computational graph into the target code according to the conversion rule reverse to the foregoing described preset conversion rule, the optimization apparatus may compile the target code based on the compilation tool, to obtain the machine-executable code corresponding to the target code.

For example, before optimizing the first computational graph, the optimization apparatus may obtain, through the input/output interface or the communication interface, the compilation tool uploaded by the user. In this way, after the optimization apparatus converts the target computational graph into the target code according to the conversion rule reverse to the foregoing described preset conversion rule, the optimization apparatus may compile the target code based on the compilation tool, to obtain the machine-executable code corresponding to the target code.

It should be understood that the compilation tool may be any compilation tool that can compile the target code into the machine-executable code. The compilation tool is not specifically limited in this embodiment of this application.

The foregoing describes the computational graph optimization method provided in embodiments of this application. The following describes a process in which the optimization apparatus removes an invalid graph transformation manner from at least one candidate graph transformation manner determined by the optimization apparatus when performing S102 in each iterative transformation, starting from performing the second iterative transformation.

It should be understood that, for distinguishing description, in the following embodiments of this application, a graph transformation manner that is determined by the optimization apparatus in the plurality of preset graph transformation manners according to the subgraph matching rule and that matches the subgraph in the first computational graph is referred to as an initial candidate graph transformation manner. In addition, an initial candidate graph transformation manner in which the invalid graph transformation manner is removed is referred to as the candidate graph transformation manner.

It should be understood that, when the optimization apparatus performs S102 for the first time, the initial candidate graph transformation manner determined by the optimization apparatus is the candidate graph transformation manner.

In this way, when the optimization apparatus performs S102 to S104 for the second time after performing S101 to S104 for the first time, in S102, the optimization apparatus may remove, based on a pruning policy, the invalid graph transformation manner from one or more determined initial candidate graph transformation manners, to obtain the candidate graph transformation manner required when performing S103.

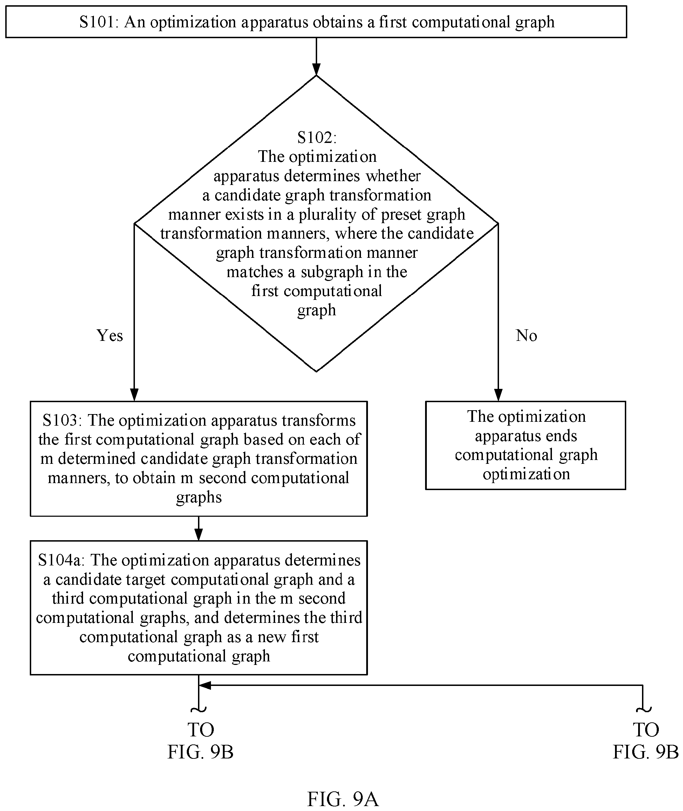

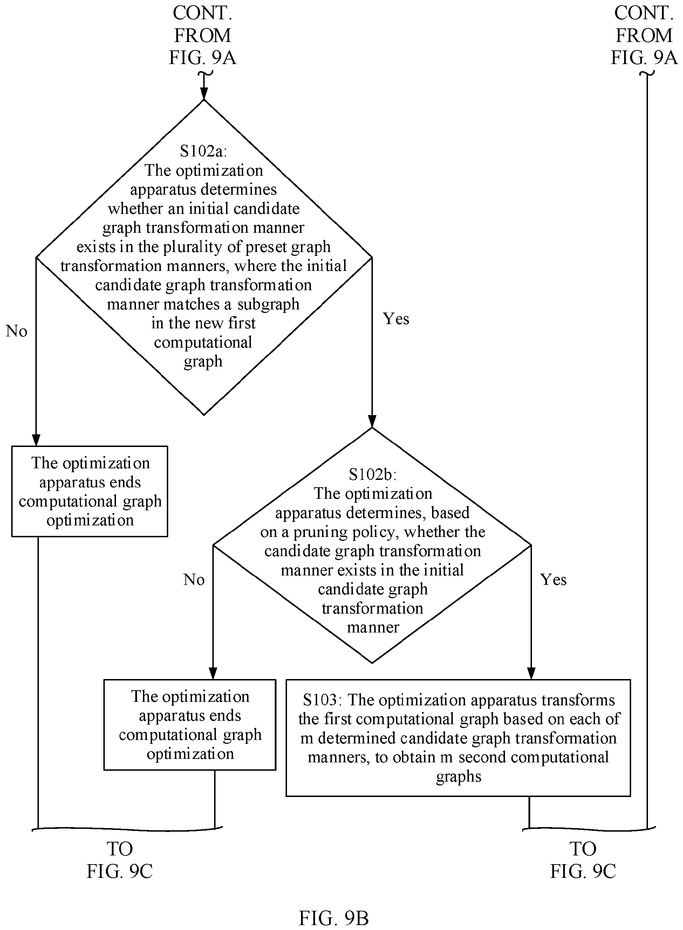

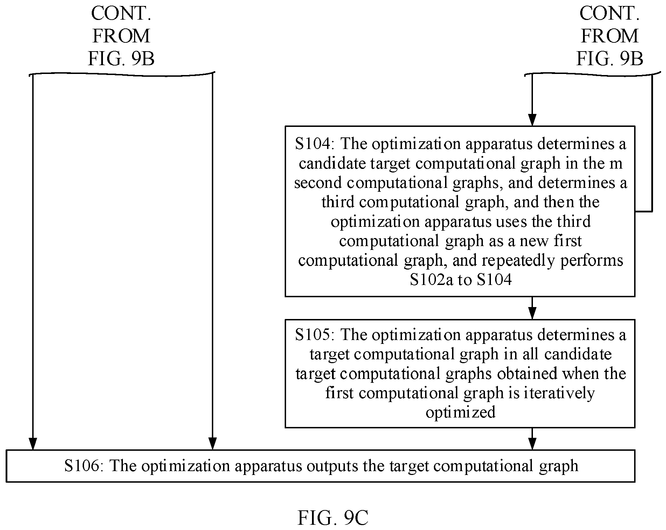

FIG. 9A to FIG. 9C are a schematic flowchart of another computational graph optimization method according to an embodiment of this application. As shown in FIG. 9A to FIG. 9C, when an optimization apparatus first performs S101, and then performs S102 to S104 for the first time, S104 may be replaced with S 104a.

S104a: Determine a candidate target computational graph and a third computational graph in the m second computational graphs, and determine the third computational graph as a new first computational graph.

Specifically, for a process in which the optimization apparatus determines the candidate target computational graph and the third computational graph in the m second computational graphs, refer to the foregoing description. Details are not described herein again.

Then, when the optimization apparatus performs S102 to S104 for the second time, S102 performed in each iterative transformation may be replaced with S102a.

S102a: Determine whether an initial candidate graph transformation manner exists in the plurality of preset graph transformation manners, where the initial candidate graph transformation manner matches a subgraph in the new first computational graph.

For a process in which the optimization apparatus determines whether the initial candidate graph transformation manner exists in the plurality of preset graph transformation manners, refer to the foregoing description of determining, by the optimization apparatus, whether the candidate graph transformation manner exists in the plurality of preset graph transformation manners in S102. Details are not described herein again.

When the optimization apparatus determines that the initial candidate graph transformation manner exists in the plurality of preset graph transformation manners, S102b is performed.

S 102b: Determine, based on a pruning policy, whether the candidate graph transformation manner exists in the initial candidate graph transformation manner.

When a value of a quantity of initial candidate graph transformation manners is j, the optimization apparatus determines, based on the pruning policy, whether the candidate graph transformation manner exists in the j initial candidate graph transformation manners. The pruning policy is used to remove an invalid graph transformation manner from the j initial candidate graph transformation manners.

Specifically, the optimization apparatus may remove, based on the pruning policy and a graph transformation manner used to transform to obtain a current first computational graph, an invalid graph transformation manner from the j initial candidate graph transformation manners, and further determine whether the candidate graph transformation manner exists.

It should be understood that the current first computational graph is a third computational graph obtained through a previous iterative transformation of a current iterative transformation. In this case, the graph transformation manner used to transform to obtain the current first computational graph is a graph transformation manner in which a first computational graph in the previous iterative transformation is transformed into the third computational graph in the previous iterative transformation.

For example, if the current iterative transformation is a second iterative transformation, the current first computational graph is a first computational graph of the second iterative transformation, that is, a third computational graph obtained through a first iterative transformation. In this case, the graph transformation manner used to transform the current first computational graph is a graph transformation manner in which a first computational graph in the first iterative transformation is transformed into the third computational graph in the first iterative transformation.

In this way, when the graph transformation manner used to transform the current first computational graph and any initial candidate graph transformation manner in the j initial candidate graph transformation manners meet the pruning policy, the any initial candidate graph transformation manner is determined as an invalid graph transformation manner. In this way, the optimization apparatus may remove the invalid graph transformation manner from the j initial candidate graph transformation manners based on the pruning policy.

When a quantity of invalid graph transformation manners is j, it indicates that all of the j initial candidate graph transformation manners are invalid graph transformation manners, that is, no candidate graph transformation manner exists in the j initial candidate graph transformation manners. In this case, the optimization apparatus ends the computational graph optimization process, that is, a process of iteratively optimizing the first computational graph converges. For a description of a process of iteratively optimizing the first computational graph, refer to the foregoing description. Details are not described herein again.

When a quantity of invalid graph transformation manners is less than j, it indicates that a part of the j initial candidate graph transformation manners are invalid graph transformation manners, that is, n candidate graph transformation manners exist in the j initial candidate graph transformation manners, where n is a positive integer less than j. In this case, the optimization apparatus executes S103 and S104.

Specifically, the pruning policy may include at least one of the following policies 1 to 6. Policies 1 to 4 are described in detail as follows:

Policy 1: A quantity of times of loop tiling performed on same loop logic exceeds a preset threshold.

Loop tiling is a preset operation performed on loop logic in a given computational graph in a graph transformation manner, and the loop tiling indicates to tile the loop logic in the given computational graph into two or more layers of nested loop logic by using a preset step. Specifically, for a description of the preset step, refer to the foregoing description. Details are not described herein again.

When loop tiling is performed on same loop logic in a given computational graph for a plurality of times, if a loop step of the loop logic in the current given computational graph is greater than a preset step of loop tiling in a graph transformation manner, the graph transformation manner is invalid.

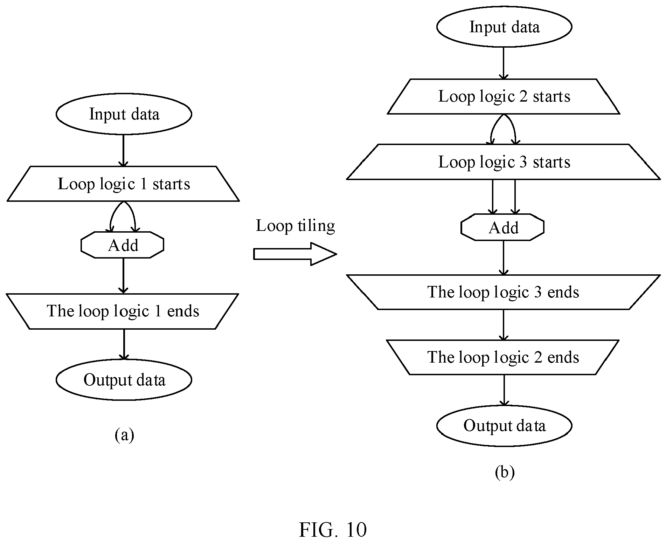

For example, FIG. 10 is a schematic diagram of performing loop tiling on a computational graph.

As shown in (a) in FIG. 10, a graph transformation manner 1 indicates to perform a loop tiling operation on loop logic 1 in a computational graph 1 in a 16-bit step. The loop logic 1 is a single-layer loop, and a quantity of cycles is 32, that is, a loop step of the loop logic 1 is 32 bits. In this case, after the computational graph 1 is transformed in the graph transformation manner 1, a computational graph 2 shown in (b) in FIG. 10 is obtained.

As shown in (b) in FIG. 10, loop logic 2 and loop logic 3 nested in the loop logic 2 are included in the computational graph 2. A quantity of cycles of the loop logic 3 is 16, that is, a loop step is 16 bits. A quantity of cycles of the loop logic 2 is 2.

In this case, for the computational graph 2, if the computational graph 2 continues to be transformed by using the graph transformation manner 1, because the tiling step in the graph transformation manner 1 is 16 bits, and a loop step of the computational graph 2 is also 16 bits, the graph transformation manner 2 is an invalid graph transformation manner for the computational graph 2.

The loop logic 1 in the computational graph 1 and the nested loop logic formed by the loop logic 2 and the loop logic 3 in the computational graph 2 are essentially the same loop logic. That is, if loop tiling is performed for a plurality of times on the same loop logic, for example, a quantity of times of loop tiling exceeds a preset threshold, loop tiling may be invalid, that is, a graph transformation manner indicating loop tiling may be invalid.

Therefore, it is prohibited to perform loop tiling on the same loop logic for a plurality of times. That is, for the same loop logic in the computational graph, it is prohibited to perform a graph transformation manner that indicates to perform a loop tiling operation for a plurality of times.

In this way, when the graph transformation manner used to transform the current first computational graph and any initial candidate graph transformation manner in the j initial candidate graph transformation manners meet the policy 1, the optimization apparatus determines that the any initial candidate graph transformation manner is an invalid graph transformation manner.

Policy 2: Loop interchange is performed on two same pieces of loop logic for a plurality of times.

Loop interchange is another preset operation performed on loop logic in a given computational graph in a graph transformation manner, and the loop interchange indicates to exchange positions of two pieces of loop logic in the given computational graph. For a specific description of the loop interchange, refer to the foregoing description. Details are not described herein again.

If loop interchange is performed on two same pieces of loop logic twice, two graph transformation manners indicating to perform the loop interchange twice are graph transformation manners that are mutually inverse. That is, after the loop interchange is performed on the two pieces of loop logic once, the loop interchange is performed on the two pieces of loop logic again, and the two pieces of loop logic are restored to a state in which the loop interchange is not performed, that is, performing of the second loop interchange is invalid.

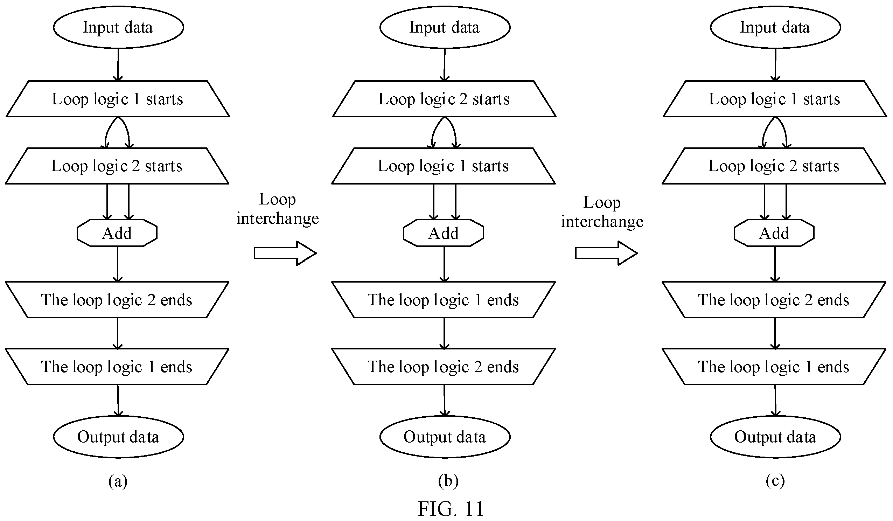

For example, FIG. 11 is a schematic diagram of performing loop interchange on a computational graph.

If a graph transform manner 1 indicates to perform a loop interaction operation on loop logic 1 and loop logic 2 in a given computational graph, as shown in (a) in FIG. 11, when a computational graph 1 shown in (a) in FIG. 11 is a computational graph matching the graph transformation manner 1, after the computational graph 1 is transformed in the graph transformation manner 1, a computational graph 2 shown in (b) in FIG. 11 is obtained.

As shown in (b) in FIG. 11, the computational graph 2 is a computational graph matching the graph transformation manner 1, and after the computational graph 2 is transformed in the graph transformation manner 1, a computational graph 3 shown in (c) in FIG. 11 is obtained.

It can be seen from FIG. 11 that the computational graph 1 has a same graph structure as the computational graph 3, that is, the graph structure of the computational graph 1 remains unchanged after the computational graph 1 performs loop interchange twice.

Therefore, for same loop logic, if loop interchange has been performed once, it is prohibited to perform loop interchange again. In other words, for the same loop logic, it is prohibited to perform loop interchange for a plurality of times. That is, for the same loop logic in a computational graph, it is prohibited to perform a graph transformation manner that indicates to perform loop interchange for a plurality of times.

In this way, when the graph transformation manner used to transform the current first computational graph and any initial candidate graph transformation manner in the j initial candidate graph transformation manners meet the policy 2, the optimization apparatus determines that the any initial candidate graph transformation manner is an invalid graph transformation manner.

Policy 3: Same loop logic is first expanded (expansion) and then collapsed (collapse), or is first collapsed and then expanded.

The expansion or collapse operation performed on loop logic is another preset operation performed on the loop logic in a given computational graph in a graph transformation manner.

The expansion operation performed on the loop logic means expanding one piece of loop logic including a plurality of variables (for example, s variables, where s is a positive integer) into a plurality of pieces of loop logic including one variable, or into a plurality of pieces of loop logic including a plurality of variables (for example, t variables, where t is a positive integer less than s). This is not limited.

The collapse operation performed on the loop logic is collapsing a plurality of pieces of loop logic including one or more variables into one piece of loop logic including a plurality of variables.

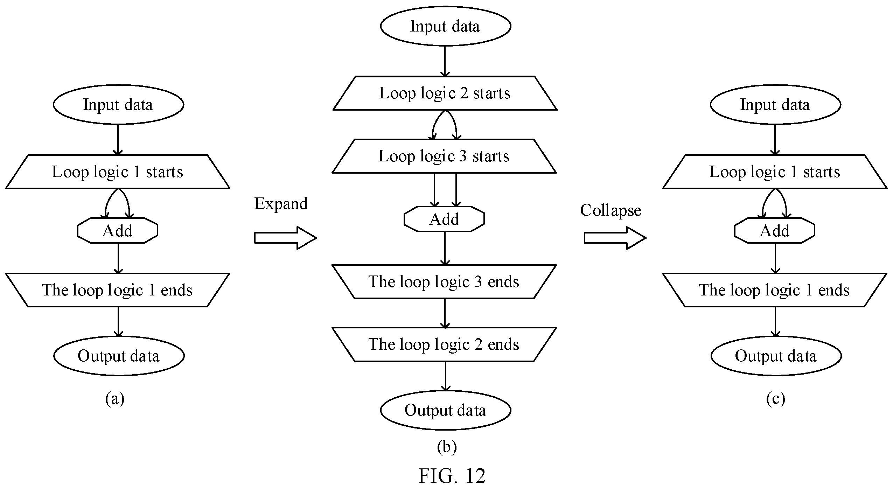

For example, FIG. 12 is a schematic diagram of performing expansion and collapse operations on loop logic in a computational graph. A graph transformation manner 1 indicates to perform an expansion operation on loop logic in a given computational graph, and a graph transformation manner 2 indicates to perform a collapse operation on loop logic in a given computational graph.

In this case, as shown in (a) in FIG. 12, if loop logic 1 in a computational graph 1 shown in (a) in FIG. 12 is loop logic including two variables (for example, x and y), and the graph transformation manner 1 matches the computational graph 1, after the computational graph 1 is transformed in the graph transformation manner 1, the loop logic 1 including two variables in the computational graph 1 is expanded into loop logic 2 including a variable (for example, x) and loop logic 3 including a variable (for example, y). That is, after the computational graph 1 is transformed in the graph transformation manner 1, a computational graph 2 including the loop logic 2 and the loop logic 3 shown in (b) in FIG. 12 is obtained.

When the graph transformation manner 2 matches the computational graph 2, after the computational graph 2 is transformed by using the graph transformation manner 2, the loop logic 2 including a variable (for example, x) and the loop logic 3 including a variable (for example, y) that are included in the computational graph 2 are combined into the loop logic 1 including two variables (for example, x and y). That is, after the computational graph 2 is transformed in the graph transformation manner 2, the computational graph 3 shown in (c) in FIG. 12 is obtained.

It can be seen from FIG. 12 that the computational graph 1 has a same graph structure as the computational graph 3, that is, the graph structure of the computational graph 1 remains unchanged after an expansion operation and a collapse operation are successively performed on loop logic in the computational graph 1.

The loop logic 1 in the computational graph 1 and the nested loop logic formed by the loop logic 2 and the loop logic 3 in the computational graph 2 are essentially the same loop logic. That is, if an expansion operation is performed on the same loop logic before a collapse operation is performed, the collapse operation is invalid. Similarly, if a collapse operation is performed on the same loop logic before an expansion operation is performed, the expansion operation is invalid.

It can be learned that a graph transformation manner indicating to perform an expansion operation on loop logic and a graph transformation manner indicating perform a collapse operation on the loop logic are mutually inverse.

Therefore, it is prohibited to first expand and then collapse the same loop logic. Similarly, it is prohibited to first collapse and then expand the same loop logic.

That is, for the same loop logic in a computational graph, it is prohibited to first perform a graph transformation manner that indicates to expand the loop logic, and then perform a graph transformation manner that indicates to collapse the loop logic. Similarly, for the same loop logic in a computational graph, it is prohibited to first perform a graph transformation manner that indicates to collapse the loop logic, and then perform a graph transformation manner that indicates to expand the loop logic.

In this way, when the graph transformation manner used to transform the current first computational graph and any initial candidate graph transformation manner in the j initial candidate graph transformation manners meet the policy 3, the optimization apparatus determines that the any initial candidate graph transformation manner is an invalid graph transformation manner.

Policy 4: Same loop logic is first fissed (fission) and then fused (fusion), or first fused and then fissed.

A fission or fusion operation performed on loop logic is another preset operation performed on the loop logic in a given computational graph in a graph transformation manner.

The fission operation performed on the loop logic means fissing loop logic that needs to perform a plurality of (for example, s) operations internally into a plurality of pieces of loop logic that perform only one operation internally, or into a plurality of pieces of loop logic that need to perform a plurality of (for example, t, where t < s) operations internally. This is not limited.

The fusion operation performed on the loop logic means fusing a plurality of pieces of loop logic that need to perform one or more operations internally into a piece of loop logic that needs to perform a plurality of operations internally.

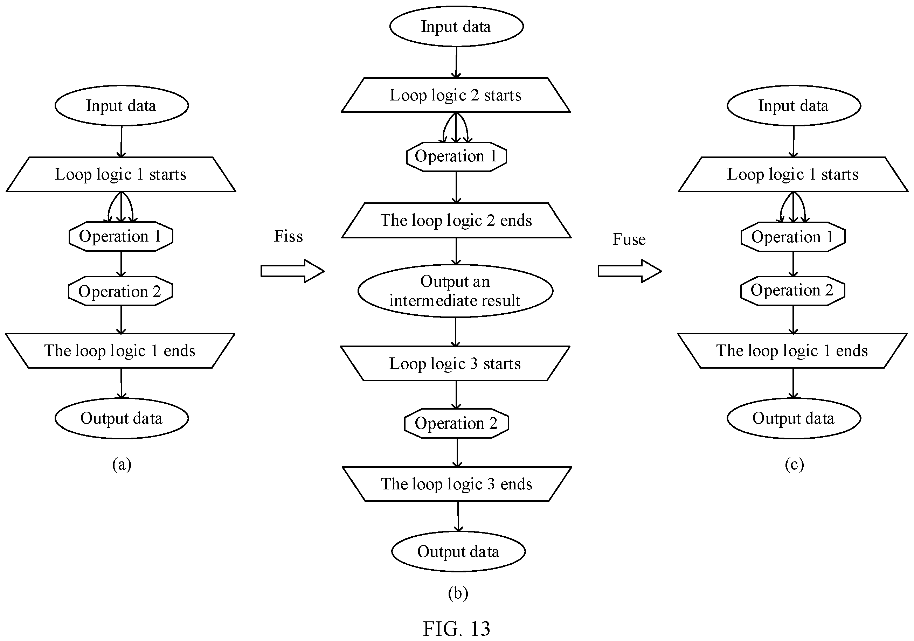

For example, FIG. 13 is a schematic diagram of performing fission and fusion operations on loop logic in a computational graph. A graph transformation manner 1 indicates to perform a fission operation on loop logic in a given computational graph, and a graph transformation manner 2 indicates to perform a fusion operation on loop logic in a given computational graph.

In this case, as shown in (a) in FIG. 13, if loop logic 1 in a computational graph 1 shown in (a) in FIG. 13 is loop logic that needs to perform two operations (an operation 1 and an operation 2) internally, and the graph transformation manner 1 matches the computational graph 1, after the computational graph 1 is transformed in the graph transformation manner 1, the loop logic 1 that needs to perform two operations internally is fissed into loop logic 2 that needs to perform one operation (for example, the operation 1) internally and loop logic 3 that needs to perform one operation (for example, the operation 2) internally. That is, after the computational graph 1 is transformed in the graph transformation manner 1, a computational graph 2 including the loop logic 2 and the loop logic 3 shown in (b) in FIG. 13 is obtained. The loop logic 2 and the loop logic 3 are sequentially executed in a manner shown by an arrow in FIG. 13.

When the graph transformation manner 2 matches the computational graph 2, after the computational graph 2 is transformed by using the graph transformation manner 2, the loop logic 2 that needs to perform one operation (for example, the operation 1) internally and the loop logic 3 that needs to perform one operation (for example, the operation 2) internally that are included in the computational graph 2 are fused into the loop logic 1 that needs to perform two operations (for example, the operation 1 and the operation 2) internally. That is, after the computational graph 2 is transformed in the graph transformation manner 2, the computational graph 3 shown in (c) in FIG. 13 is obtained.

It can be seen from FIG. 13 that the computational graph 1 has a same graph structure as the computational graph 3, that is, the graph structure of the computational graph 1 remains unchanged after a fission operation and a fusion operation are successively performed on loop logic in the computational graph 1.

The loop logic 1 in the computational graph 1 and the serial loop logic formed by the loop logic 2 and the loop logic 3 in the computational graph 2 are essentially the same loop logic. That is, if a fission operation is performed on the same loop logic before a fusion operation is performed, the fusion operation is invalid. Similarly, if a fusion operation is performed on the same loop logic before a fission operation is performed, the fission operation is invalid.

It can be learned that a graph transformation manner indicating to perform a fission operation on loop logic and a graph transformation manner indicating to perform a fusion operation on the loop logic are mutually inverse.

Therefore, it is prohibited to first fiss and then fuse the same loop logic. Similarly, it is prohibited to first fuse and then fiss the same loop logic.

That is, for the same loop logic in a computational graph, it is prohibited to first perform a graph transformation manner that indicates to fiss the loop logic, and then perform a graph transformation manner that indicates to fuse the loop logic. Similarly, for the same loop logic in a computational graph, it is prohibited to first perform a graph transformation manner that indicates to fuse the loop logic, and then perform a graph transformation manner that indicates to fiss the loop logic.

In this way, when the graph transformation manner used to transform the current first computational graph and any initial candidate graph transformation manner in the j initial candidate graph transformation manners meet the policy 4, the optimization apparatus determines that the any initial candidate graph transformation manner is an invalid graph transformation manner.

In this way, by using the foregoing policies 1 to 4, the optimization apparatus may determine, in the j initial candidate graph transformation manners, whether the candidate graph transformation manner exists. The candidate graph transformation manner is a graph transformation manner other than an invalid graph transformation manner in the j initial candidate graph transformation manners.

It should be understood that, if the current iterative transformation is the q^{th} iterative transformation, the graph transformation manner used to transform the current first computational graph includes a graph transformation manner used to transform the first computational graph into the third computational graph in all iterative transformations before the q^{th} iterative transformation.

For example, if a value of q is 3, the current iterative transformation is a third iterative transformation. In this case, the graph transformation manner used to transform the current first computational graph includes a graph transformation manner 1 in which the first computational graph is transformed into the third computational graph in the second iterative transformation. The third computational graph is the first computational graph in the third iterative transformation. In addition, the graph transformation manner used to transform the current first computational graph further includes a graph transformation manner 2 in which the first computational graph is transformed into the computational graph in the first iterative transformation. The third computational graph is the first computational graph in the second iterative transformation.

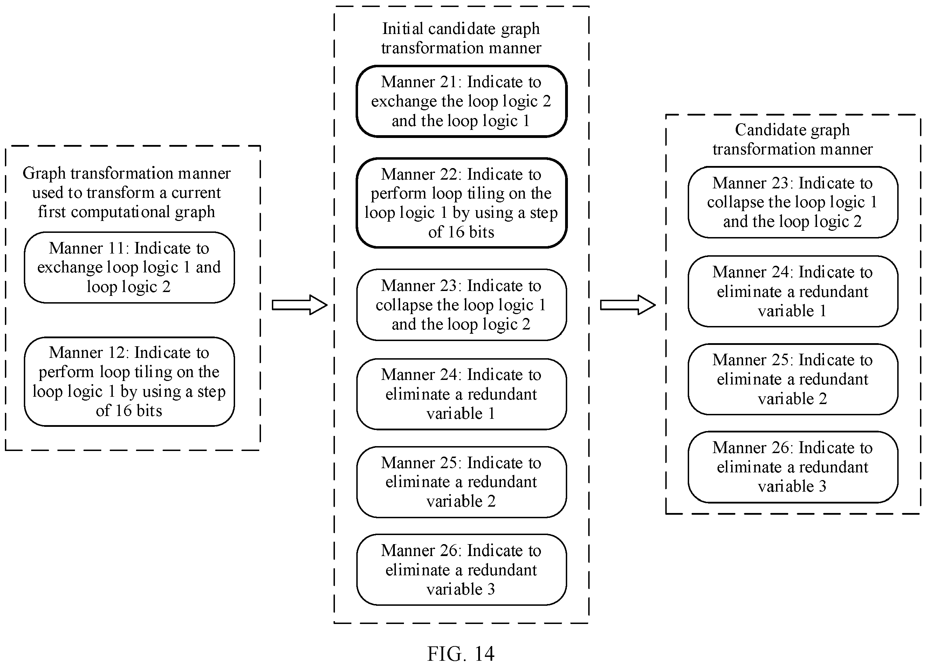

For more clear description of determining the invalid graph transformation manner in the j initial candidate graph transformation manners based on the pruning policy, for example, refer to FIG. 14. FIG. 14 is a schematic diagram of determining an invalid graph transformation manner based on a pruning policy.

As shown in FIG. 14, a graph transformation manner used to transform a current first computational graph includes Manner 11 and Manner 12. Initial candidate graph transformation manners determined by an optimization apparatus in a plurality of preset graph transformation manners according to a subgraph matching rule include Manner 21, Manner 22, Manner 23, Manner 24, Manner 25, and Manner 26.

It can be learned that Manner 11 and Manner 21 meet the policy 2 in the foregoing pruning policy. In addition, if a value of a preset threshold in the policy 1 in the foregoing pruning policy is 1, Manner 12 and Manner 22 meet the policy 1 in the foregoing pruning policy.

In this way, the optimization apparatus may determine Manner 21 and Manner 22 in the initial candidate graph transformation manners as invalid graph transformation manners, and determine graph transformation manners other than Manner 21 and Manner 22 in the initial candidate graph transformation manners as candidate graph transformation manners. That is, the candidate graph transformation manners include Manner 23, Manner 24, Manner 25, and Manner 26.

Then, S103 and S104 are performed, and S105 and S106 are performed. Details are not described again.

It should be understood that, when the optimization apparatus performs S103 in the second iterative transformation, the optimization apparatus transforms the first computational graph (namely, the third computational graph in the first iterative transformation) based on each of the n candidate graph transformation manners determined in S102b, to obtain n second computational graphs (corresponding to the fourth computational graph in this embodiment of this application).

Further, when the optimization apparatus performs S104 in the second iterative transformation, the optimization apparatus may convert the n second computational graphs determined in S103 into n ASTs, and determine, as a candidate target computational graph, a second computational graph corresponding to an AST with the smallest quantity of calculation operations and the smallest quantity of memory access operations in the n ASTs. For a related description of the AST, refer to the foregoing description. Details are not described herein again.

It can be learned that, in any iterative transformation except the first iterative transformation in the plurality of iterative transformations, the optimization apparatus may remove, based on the pruning policy, the invalid graph transformation manner from the plurality of preset graph transformation manners used to transform the computational graph. In this way, the optimization apparatus may perform the plurality of iterative transformations on a to-be-optimized first computational graph based on a plurality of preset graph transformation manners in which the invalid graph transformation manner is removed, to obtain the target computational graph.

So far, this embodiment of this application provides a computational graph optimization method. In the method, computational graph optimization is automatically implemented by using a plurality of iterative transformations. In addition, according to the method, the invalid graph transformation manner is removed based on the pruning policy in the process of iteratively optimizing the computational graph. This avoids an iterative transformation rollback caused by the invalid graph transformation manner, and further improves loop convergence efficiency of iteratively optimizing the computational graph.

To deepen understanding of the method provided in this embodiment of this application, the following describes the computational graph optimization method provided in this embodiment of this application with reference to specific application scenarios.

### Application Scenario 1

A function implemented by using the computational graph optimization method provided in this embodiment of this application may be used as a function module of a compilation tool. In this way, when source code that is of an application and that is written based on a high-level language is compiled into machine-executable code by using the compilation tool, optimization of the application may be implemented by using the computational graph optimization method provided in this embodiment of this application.

The compilation tool with a computational graph optimization function may be preset in any computing device with a computing processing capability. In this way, a user may input to-be-compiled program source code into the computing device through an input/output interface of the computing device.

Then, the computing device runs the compilation tool and inputs the to-be-compiled program source code into the compilation tool. In this way, a computational graph optimization module in the compilation tool may perform steps S101 to S106 shown in FIG. 4 or FIG. 9A to FIG. 9C, to optimize a computational graph corresponding to the to-be-compiled program source code. Then, a compilation module in the compilation tool compiles target code corresponding to an optimized computational graph, to output optimized and compiled application program code. It should be understood that the optimized and compiled application program code is machine-executable binary code.

### Application Scenario 2

The computational graph optimization method provided in this embodiment of this application may be implemented by using an optimization app installed on a computing device.

In this way, by running the optimization app, the computing device may perform steps S101 to S 106 shown in FIG. 4 or FIG. 9A to FIG. 9C, to optimize to-be-optimized application.

### Application Scenario 3

A function implemented by using the computational graph optimization method provided in this embodiment of this application may be used as an optimization function of a computing device. For example, the function may be implemented by using a chip that is preset in the computing device and that can implement the computational graph optimization method provided in this embodiment of this application. In this way, the computing device may perform steps S101 to S106 shown in FIG. 4 or FIG. 9A to FIG. 9C, to optimize a computational graph.

Optionally, the computing device may be a server (or cloud) device.

For example, a user may send an optimization request to the server (or cloud) device by using a client device, where the optimization request is used to request to optimize code of to-be-optimized application. In this case, the optimization request includes the code of the to-be-optimized application. Alternatively, the optimization request is used to request to optimize a computational graph corresponding to the to-be-optimized application. In this case, the optimization request includes the computational graph corresponding to the to-be-optimized application.

Then, the server (or cloud) device may perform, based on the received optimization request, steps S101 to S106 shown in FIG. 4 or FIG. 9A to FIG. 9C, to optimize the computational graph of the application indicated by the optimization request, thereby implementing optimization of the application.

Then, the server (or cloud) device may send a computational graph, code, or executable binary code of an optimized application to the client device.

In conclusion, this embodiment of this application provides a computational graph optimization method. In the method, computational graph optimization is implemented in a manner of automatic iterative transformation. In this embodiment of this application, when a computational graph with optimal performance is searched for in an iterative transformation process, an optimal iterative combination of graph transformation manners used to transform a computational graph is found, and a computational graph obtained through transformation in the graph transformation manner in the iterative combination is an optimized computational graph. Therefore, compared with a manual computational graph optimization method that requires manual intervention, the method provided in this embodiment of this application improves optimization efficiency.

In addition, according to the method provided in this embodiment of this application, the invalid graph transformation manner is removed based on the pruning policy in the process of iteratively optimizing the computational graph. This avoids an iterative transformation rollback caused by the invalid graph transformation manner, and further improves loop convergence efficiency of iteratively optimizing the computational graph.

The foregoing mainly describes the solutions provided in embodiments of this application from the perspective of the methods. To implement the foregoing functions, corresponding hardware structures and/or software modules for performing the functions are included. A person skilled in the art should easily be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the computational graph optimization apparatus may be divided into function modules based on the foregoing method examples. For example, each function module may be obtained through division based on each corresponding function, or two or more functions may be integrated into one processing module. The integrated module may be implemented in a form of hardware, or may be implemented in a form of a software functional module. It should be noted that, in embodiments of this application, module division is an example, and is merely a logical function division. In an actual implementation, another division manner may be used.

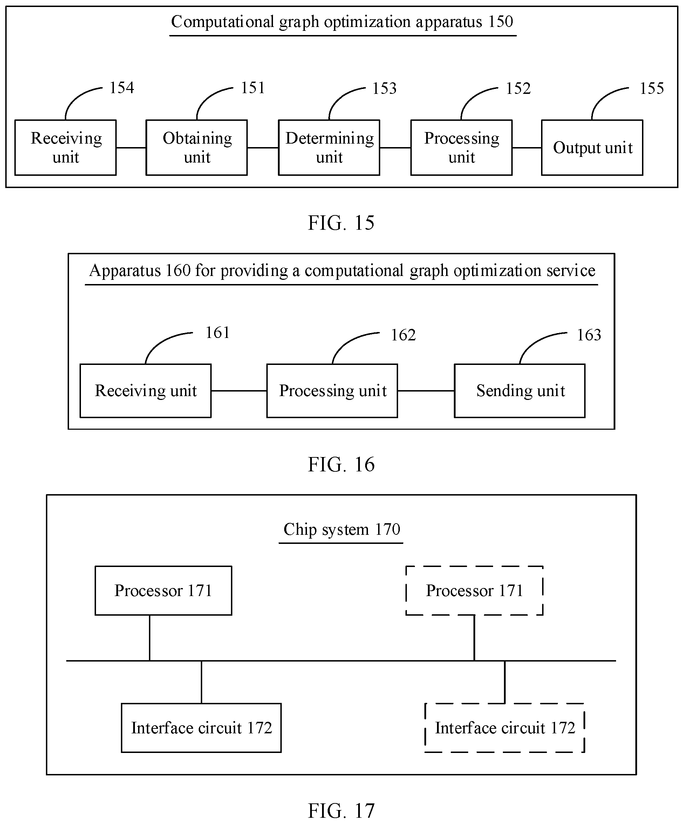

FIG. 15 is a schematic diagram of a structure of a computational graph optimization apparatus 150 according to an embodiment of this application. The computational graph optimization apparatus 150 may be configured to perform the foregoing computational graph optimization method, for example, configured to perform the method shown in FIG. 4 or FIG. 9A to FIG. 9C. The computational graph optimization apparatus 150 may include an obtaining unit 151 and a processing unit 152.

The obtaining unit 151 is configured to obtain a first computational graph obtained through conversion based on to-be-optimized code. The processing unit 152 is configured to perform a plurality of iterative transformations on the first computational graph based on a plurality of preset graph transformation manners, to obtain a target computational graph. The target computational graph is a computational graph obtained by optimizing the first computational graph.

In an example, with reference to FIG. 4, the obtaining unit 151 may be configured to perform S101, and the processing unit 152 may be configured to perform S101 to S104.

Optionally, the computational graph optimization apparatus 150 further includes a determining unit 153. The processing unit 152 is specifically configured to: in any one of the plurality of iterative transformations, perform, based on a performance evaluation policy, performance evaluation on a computational graph obtained through a transformation in at least one of the plurality of preset graph transformation manners. The determining unit 153 is configured to determine the target computational graph based on a performance evaluation result.

In an example, with reference to FIG. 4, the processing unit 152 may be configured to perform S104, and the determining unit 153 may be configured to perform S105.

Optionally, the foregoing performance evaluation policy includes: performing performance evaluation on the computational graph based on a quantity of calculation operations and a quantity of memory access operations that are of an abstract syntax tree AST corresponding to the computational graph; or performing performance evaluation on the computational graph based on running time of executable code corresponding to the computational graph.

Optionally, for any one of the plurality of iterative transformations, the processing unit 152 is further specifically configured to: select, based on a search policy, a to-be-optimized computational graph in a next iterative transformation of the any iterative transformation from a plurality of computational graphs obtained through the any iterative transformation; and perform, based on the plurality of preset graph transformation manners, the plurality of iterative transformations on the to-be-optimized computational graph in the next iterative transformation, to obtain the target computational graph.

Optionally, the search policy includes: determining, in the plurality of computational graphs based on performance of the computational graphs, the to-be-optimized computational graph in the next iterative transformation.

In an example, with reference to FIG. 4, the processing unit 152 may be configured to perform S104.

Optionally, in any iterative transformation except a first iterative transformation in the plurality of iterative transformations, the processing unit 152 is further specifically configured to: remove, based on a pruning policy, an invalid graph transformation manner from candidate graph transformation manners used to transform a computational graph; and perform the plurality of iterative transformations on the first computational graph based on a plurality of preset graph transformation manners in which the invalid graph transformation manner is removed, to obtain the target computational graph. The candidate graph transformation manner includes at least one of the plurality of preset graph transformation manners.

In an example, with reference to FIG. 9A to FIG. 9C, the processing unit 152 may be configured to perform S102b.

Optionally, the pruning policy includes at least one of the following policies: a quantity of times of loop tiling performed on same loop logic exceeds a preset threshold; loop interchange is performed on two same pieces of loop logic for a plurality of times; same loop logic is first expanded and then collapsed, or is first collapsed and then expanded; or same loop logic is first fissed and then fused, or is first fused and then fissed.

Optionally, the determining unit 153 is further configured to determine m candidate graph transformation manners from the plurality of preset graph transformation manners. The m candidate graph transformation manners match a subgraph in the first computational graph, and m is a positive integer. The processing unit 152 is specifically configured to transform the first computational graph based on each of the m candidate graph transformation manners, to obtain m second computational graphs. The m second computational graphs are in a one-to-one correspondence with the m candidate graph transformation manners. The determining unit 153 is specifically configured to determine the target computational graph based on the m second computational graphs.

In an example, with reference to FIG. 4, the determining unit 153 may be configured to perform S102 and S104, and the processing unit 152 may be configured to perform S103.

Optionally, the determining unit 153 is specifically configured to determine a first candidate target computational graph in the m second computational graphs. Performance of the first candidate target computational graph is better than performance of a computational graph other than the first candidate target computational graph in the m second computational graphs. The determining unit 153 is further configured to determine the target computational graph based on the first candidate target computational graph.

In an example, with reference to FIG. 4, the determining unit 153 may be configured to perform S 104.

Optionally, the determining unit 153 is further configured to: determine a third computational graph in the m second computational graphs; and determine n candidate graph transformation manners from the plurality of preset graph transformation manners based on the third computational graph. The n candidate graph transformation manners match a subgraph in the third computational graph, and n is a positive integer. The processing unit 152 is further configured to transform the third computational graph based on each of the n candidate graph transformation manners, to obtain n fourth computational graphs. The n fourth computational graphs are in a one-to-one correspondence with the n candidate graph transformation manners. The determining unit 153 is further configured to determine a second candidate target computational graph in the n fourth computational graphs. Performance of the second candidate target computational graph is better than performance of a computational graph other than the second candidate target computational graph in the n fourth computational graphs. The determining unit 153 is further configured to determine the target computational graph based on the first candidate computational graph and the second candidate target computational graph.

In an example, with reference to FIG. 4, the determining unit 153 may be configured to perform S104, and the processing unit 152 may be configured to perform S103.

Optionally, the computational graph optimization apparatus 150 further includes a receiving unit 154, configured to receive the first computational graph input by a user.

In an example, with reference to FIG. 4, the receiving unit 154 may be configured to perform S101.

Optionally, the obtaining unit 151 is further configured to obtain the to-be-optimized code. The processing unit 152 is further configured to convert the to-be-optimized code into the first computational graph according to a preset conversion rule.

In an example, with reference to FIG. 4, the obtaining unit 151 and the processing unit 152 may be configured to perform S101.

Optionally, the receiving unit 154 is further configured to: before converting the to-be-optimized code into the first computational graph according to the preset conversion rule, receive the preset conversion rule input by a user.

In an example, with reference to FIG. 4, the receiving unit 154 may be configured to perform S101.

Optionally, the receiving unit 154 is further configured to: before performing the plurality of iterative transformations on the first computational graph based on the plurality of preset graph transformation manners, to obtain the target computational graph, receive a preset graph transformation manner input by the user.

In an example, with reference to FIG. 4, the receiving unit 154 may be configured to perform S101.

Optionally, the computational graph optimization apparatus 150 further includes an output unit 155, configured to output the target computational graph.

In an example, with reference to FIG. 4, the output unit 155 may be configured to perform S106.

Optionally, the determining unit 153 is further configured to determine target code based on the target computational graph. The target code is code obtained by optimizing the to-be-optimized code. The processing unit 152 is further configured to compile the target code to obtain target executable code. The output unit 155 is further configured to output the target executable code.

In an example, with reference to FIG. 4, the determining unit 153, the processing unit 152, and the output unit 155 may be configured to perform S106.

For specific descriptions of the foregoing optional manners, refer to the foregoing method embodiments. Details are not described herein again. In addition, for descriptions of any of explanations and beneficial effects of the computational graph optimization apparatus 150 provided above, refer to the foregoing corresponding method embodiments. Details are not described again.

In an example, with reference to FIG. 3, functions implemented by the obtaining unit 151, the processing unit 152, and the determining unit 163 in the computational graph optimization apparatus 150 may be implemented by the processor 31 in FIG. 3 by executing program code in the memory 32 in FIG. 3. The receiving unit 154 may implement a function of the receiving unit 154 through the communication interface 34 in FIG. 3. The output unit 155 may implement a function of the output unit 155 through the input/output interface 33 in FIG. 3.

FIG. 16 is a schematic diagram of a structure of an apparatus 160 for providing a computational graph optimization service according to an embodiment of this application. The apparatus 160 for providing a computational graph optimization service may be configured to perform the foregoing method for providing a computational graph optimization service. The apparatus 160 for providing a computational graph optimization service may include a receiving unit 161, a processing unit 162, and a sending unit 163.

The receiving unit 161 is configured to receive a first computational graph that is sent by a user end and obtained through conversion based on to-be-optimized code. The processing unit 162 is configured to perform a plurality of iterative transformations on the first computational graph based on a plurality of preset graph transformation manners, to obtain a target computational graph. The target computational graph is a computational graph obtained by optimizing the first computational graph. The sending unit 163 is configured to send the target computational graph to the user end.

For specific descriptions of the foregoing optional manners, refer to the foregoing method embodiments. Details are not described herein again. In addition, for descriptions of any of explanations and beneficial effects of the apparatus 160 for providing a computational graph optimization service provided above, refer to the foregoing corresponding method embodiments. Details are not described again.

In an example, with reference to FIG. 3, functions implemented by the processing unit 162 in the apparatus 160 for providing a computational graph optimization service may be implemented by the processor 31 in FIG. 3 by executing program code in the memory 32 in FIG. 3. The receiving unit 161 and the sending unit 163 may implement functions of the receiving unit 161 and the sending unit 163 through the communication interface 34 in FIG. 3.

An embodiment of this application further provides a chip system 170. As shown in FIG. 17, the chip system 170 includes at least one processor and at least one interface circuit. In an example, when the chip system 170 includes one processor and one interface circuit, the processor may be a processor 171 shown in a solid box (or a processor 171 shown in a dashed box) in FIG. 17, and the interface circuit may be an interface circuit 172 shown in a solid box (or an interface circuit 172 shown in a dashed box) in FIG. 17. When the chip system 170 includes two processors and two interface circuits, the two processors include the processor 171 shown in the solid box and the processor 171 shown in the dashed box in FIG. 17, and the two interface circuits include the interface circuit 172 shown in the solid box and the interface circuit 172 shown in the dashed box in FIG. 17. This is not limited.

The processor 171 and the interface circuit 172 may be interconnected through a line. For example, the interface circuit 172 may be configured to receive a signal (for example, obtain a first computational graph). For another example, the interface circuit 172 may be configured to send a signal to another apparatus (for example, the processor 171). For example, the interface circuit 172 may read instructions stored in the memory, and send the instructions to the processor 171. When the instructions are executed by the processor 171, a computational graph optimization apparatus may be enabled to perform the steps in the foregoing embodiments. Certainly, the chip system 170 may further include another discrete component. This is not specifically limited in this embodiment of this application.

Another embodiment of this application further provides a computer-readable storage medium. The computer-readable storage medium stores instructions. When the instructions are run on a computational graph optimization apparatus, the computational graph optimization apparatus performs steps performed by the computational graph optimization apparatus in the method process shown in the foregoing method embodiments.

In some embodiments, the disclosed methods may be implemented as computer program instructions encoded in a machine-readable format on a computer-readable storage medium or encoded on another non-transitory medium or product.

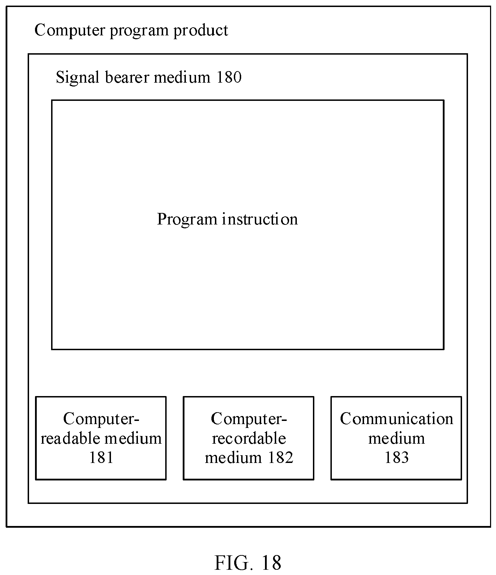

FIG. 18 schematically shows a conceptual partial view of a computer program product according to an embodiment of this application. The computer program product includes a computer program used to execute a computer process on a computing device.

In an embodiment, the computer program product is provided by using a signal bearer medium 180. The signal bearer medium 180 may include one or more program instructions. When the one or more program instructions are run by one or more processors, the functions or a part of the functions described in FIG. 4 or FIG. 9A to FIG. 9C may be provided. Therefore, for example, one or more features of S101 to S106 in FIG. 4 or FIG. 9A to FIG. 9C may be borne by one or more instructions associated with the signal bearer medium 180. In addition, the program instructions in FIG. 18 are also described as example instructions.

In some examples, the signal bearer medium 180 may include a computer-readable medium 181, for example, but not limited to, a hard disk drive, a compact disc (CD), a digital video disc (DVD), a digital tape, a memory, a read-only memory (read-only memory, ROM), or a random access memory (random access memory, RAM).

In some implementations, the signal bearer medium 180 may include a computer-recordable medium 182, for example, but not limited to, a memory, a read/write (R/W) CD, or an R/W DVD.

In some implementations, the signal bearer medium 180 may include a communication medium 183, for example, but not limited to, a digital and/or analog communication medium (for example, an optical fiber cable, a waveguide, a wired communication link, or a wireless communication link).

The signal bearer medium 180 may be conveyed by a wireless-form communication medium 183 (for example, a wireless communication medium that complies with the IEEE 1902.11 standard or another transmission protocol). The one or more program instructions may be, for example, computer-executable instructions or logic implementation instructions.

In some examples, a computational graph optimization apparatus such as that described in FIG. 4 or FIG. 9A to FIG. 9C may be configured to provide various operations, functions, or actions in response to one or more program instructions in the computer-readable medium 181, the computer-recordable medium 182, and/or the communication medium 183.

It should be understood that the arrangement described herein is merely used as an example. Thus, a person skilled in the art appreciates that another arrangement and another element (for example, a machine, an interface, a function, a sequence, and an array of functions) can be used to replace the arrangement, and some elements may be omitted together depending on an expected result. In addition, many of the described elements are functional entities that can be implemented as discrete or distributed components, or implemented in any suitable combination at any suitable position in combination with another component.

All or some of the foregoing embodiments may be implemented by using software, hardware, firmware, or any combination thereof. When a software program is used to implement embodiments, embodiments may be implemented completely or partially in a form of a computer program product. The computer program product includes one or more computer instructions. When computer-executable instructions are executed on a computer, the procedures or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (solid state disk, SSD)), or the like.

The foregoing descriptions are merely specific implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A computational graph optimization method, wherein the method is executed by a computational graph optimization apparatus, and the method comprises:
obtaining a first computational graph, wherein the first computational graph is obtained through conversion based on to-be-optimized code; and
performing a plurality of iterative transformations on the first computational graph based on a plurality of preset graph transformation manners, to obtain a target computational graph, wherein the target computational graph is a computational graph obtained by optimizing the first computational graph.

2. The method according to claim 1, wherein the performing a plurality of iterative transformations on the first computational graph based on a plurality of preset graph transformation manners, to obtain a target computational graph comprises:
in any one of the plurality of iterative transformations, performing, based on a performance evaluation policy, performance evaluation on a computational graph obtained through a transformation in at least one of the plurality of preset graph transformation manners; and
determining the target computational graph based on a performance evaluation result.

3. The method according to claim 1 or 2, wherein the performing a plurality of iterative transformations on the first computational graph based on a plurality of preset graph transformation manners, to obtain a target computational graph further comprises:
for any one of the plurality of iterative transformations, selecting, based on a search policy, a to-be-optimized computational graph in a next iterative transformation of the any iterative transformation from a plurality of computational graphs obtained through the any iterative transformation; and
performing, based on the plurality of preset graph transformation manners, the plurality of iterative transformations on the to-be-optimized computational graph in the next iterative transformation, to obtain the target computational graph.

4. The method according to any one of claims 1 to 3, wherein the performing a plurality of iterative transformations on the first computational graph based on a plurality of preset graph transformation manners, to obtain a target computational graph further comprises:
in any iterative transformation except a first iterative transformation in the plurality of iterative transformations, removing, based on a pruning policy, an invalid graph transformation manner from a candidate graph transformation manner used to transform a computational graph, wherein the candidate graph transformation manner comprises at least one of the plurality of preset graph transformation manners; and
performing the plurality of iterative transformations on the first computational graph based on a plurality of preset graph transformation manners in which the invalid graph transformation manner is removed, to obtain the target computational graph.

5. The method according to claim 2, wherein the performance evaluation policy comprises:
performing performance evaluation on the computational graph based on a quantity of calculation operations and a quantity of memory access operations that are of an abstract syntax tree AST corresponding to the computational graph; or
performing performance evaluation on the computational graph based on running time of executable code corresponding to the computational graph.

6. The method according to claim 3, wherein the search policy comprises: determining, in the plurality of computational graphs based on performance of the computational graphs, the to-be-optimized computational graph in the next iterative transformation.

7. The method according to claim 4, wherein the pruning policy comprises at least one of the following policies:
a quantity of times of loop tiling performed on same loop logic exceeds a preset threshold;
loop interchange is performed on two same pieces of loop logic for a plurality of times;
same loop logic is first expanded and then collapsed, or is first collapsed and then expanded; or
same loop logic is first fissed and then fused, or is first fused and then fissed.

8. The method according to any one of claims 1 to 7, wherein the performing a plurality of iterative transformations on the first computational graph based on a plurality of preset graph transformation manners, to obtain a target computational graph comprises:
determining m candidate graph transformation manners from the plurality of preset graph transformation manners, wherein the m candidate graph transformation manners match a subgraph in the first computational graph, and m is a positive integer;
transforming the first computational graph based on each of the m candidate graph transformation manners, to obtain m second computational graphs, wherein the m second computational graphs are in a one-to-one correspondence with the m candidate graph transformation manners; and
determining the target computational graph based on the m second computational graphs.

9. The method according to claim 8, wherein the determining the target computational graph based on the m second computational graphs comprises:
determining a first candidate target computational graph in the m second computational graphs, wherein performance of the first candidate target computational graph is better than performance of a computational graph other than the first candidate target computational graph in the m second computational graphs; and
determining the target computational graph based on the first candidate target computational graph.

10. The method according to claim 9, wherein the determining the target computational graph based on the m second computational graphs further comprises:
determining a third computational graph in the m second computational graphs;
determining n candidate graph transformation manners from the plurality of preset graph transformation manners based on the third computational graph, wherein the n candidate graph transformation manners match a subgraph in the third computational graph, and n is a positive integer;
transforming the third computational graph based on each of the n candidate graph transformation manners, to obtain n fourth computational graphs, wherein the n fourth computational graphs are in a one-to-one correspondence with the n candidate graph transformation manners;
determining a second candidate target computational graph in the n fourth computational graphs, wherein performance of the second candidate target computational graph is better than performance of a computational graph other than the second candidate target computational graph in the n fourth computational graphs; and
determining the target computational graph based on the first candidate computational graph and the second candidate target computational graph.

11. The method according to any one of claims 1 to 10, wherein the obtaining a first computational graph comprises:
receiving the first computational graph input by a user.

12. The method according to any one of claims 1 to 10, wherein the obtaining a first computational graph comprises:
obtaining the to-be-optimized code; and
converting the to-be-optimized code into the first computational graph according to a preset conversion rule.

13. The method according to claim 12, wherein before the converting the to-be-optimized code into the first computational graph according to a preset conversion rule, the method further comprises:
receiving the preset conversion rule input by a user.

14. The method according to any one of claims 1 to 13, wherein before the performing a plurality of iterative transformations on the first computational graph based on a plurality of preset graph transformation manners, to obtain a target computational graph, the method further comprises:
receiving a preset graph transformation manner input by the user.

15. The method according to any one of claims 1 to 14, wherein the method further comprises:
outputting the target computational graph.

16. The method according to any one of claims 1 to 15, wherein the method further comprises:
determining target code based on the target computational graph, wherein the target code is code obtained by optimizing the to-be-optimized code;
compiling the target code to obtain target executable code; and
outputting the target executable code.

17. A method for providing a computational graph optimization service, comprising:
receiving a first computational graph sent by a user end, wherein the first computational graph is obtained through conversion based on to-be-optimized code;
performing a plurality of iterative transformations on the first computational graph based on a plurality of preset graph transformation manners, to obtain a target computational graph, wherein the target computational graph is a computational graph obtained by optimizing the first computational graph; and
sending the target computational graph to the user end.

18. A computational graph optimization apparatus, comprising:
an obtaining unit, configured to obtain a first computational graph, wherein the first computational graph is obtained through conversion based on to-be-optimized code; and
a processing unit, configured to perform a plurality of iterative transformations on the first computational graph based on a plurality of preset graph transformation manners, to obtain a target computational graph, wherein the target computational graph is a computational graph obtained by optimizing the first computational graph.

19. An apparatus for providing a computational graph optimization service, comprising:
a receiving unit, configured to receive a first computational graph sent by a user end, wherein the first computational graph is obtained through conversion based on to-be-optimized code;
a processing unit, configured to perform a plurality of iterative transformations on the first computational graph based on a plurality of preset graph transformation manners, to obtain a target computational graph, wherein the target computational graph is a computational graph obtained by optimizing the first computational graph; and
a sending unit, configured to send the target computational graph to the user end.

20. A computational graph optimization apparatus, comprising a memory and one or more processors, wherein the memory is configured to store computer instructions, and the processor is configured to invoke the computer instructions to perform the method according to any one of claims 1 to 16.

21. An apparatus for providing a computational graph optimization service, comprising a memory and one or more processors, wherein the memory is configured to store computer instructions, and the processor is configured to invoke the computer instructions to perform the method according to claim 17.

22. A computer-readable storage medium, wherein the computer-readable storage medium stores a computer program, and when the computer program is run on a computer, the computer is enabled to perform the method according to any one of claims 1 to 17.
